(19) **Europäisches Patentamt**

**European Patent Office**

**Office européen des brevets**

(11) Numéro de publication: **0 293 283 B1**

(12) **FASCICULE DE BREVET EUROPEEN**

(45) Date de publication de fascicule du brevet: **15.12.93** �localInt. Cl.⁵: **G06F 15/72**

(21) Numéro de dépôt: **88401167.7**

(22) Date de dépôt: **11.05.88**

(54) Procédé de traçage de courbes débordantes à l'intérieur d'une fenêtre de visualisation, et circuits de mise en oeuvre d'un tel procédé.

(30) Priorité: **14.05.87 FR 8706796**

(43) Date de publication de la demande:
**30.11.88 Bulletin 88/48**

(45) Mention de la délivrance du brevet:
**15.12.93 Bulletin 93/50**

(84) Etats contractants désignés:
**DE GB NL**

(56) Documents cités:
**EP-A- 0 160 306**

**PATENT ABSTRACTS OF JAPAN, vol. 10, no. 84 (P-442)[2141], 3 avril 1986; & JP-A-60 220 473 (FUJITSU K.K.) 05-11-1985**

**PROCEEDINGS IECON'84, 1984 INTERNATIONAL CONFERENCE ON INDUSTRIAL ELECTRONICS, CONTROL AND INSTRUMENTATION, Tokyo, 22-26 octobre 1984, vol. 1, pages 429-431, IEEE, New York, US; T. ASAKA et al.: "High speed conic-section graphics"**

(73) Titulaire: **FRANCE TELECOM**
**6, Place d'Alleray**
**F-75015 Paris(FR)**

Titulaire: **Etablissement Public Télédiffusion de France**
**10, rue d'Oradour-sur-Glane**
**F-75015 Paris(FR)**

(72) Inventeur: **Roux, Catherine**
**32, Boulevard de Chezy**
**F-35000 Rennes(FR)**
Inventeur: **Rahuel, Jean-Claude**
**12, Square de Tanouarn**
**F-35000 Rennes(FR)**

(74) Mandataire: **Rodhain, Claude et al**
**Cabinet Claude Rodhain**
**30, rue la Boétie**
**F-75008 Paris (FR)**

## Description

L'invention concerne un procédé de traçage de courbes, notamment destiné à être mis en oeuvre dans un terminal graphique ou vidéographique. Plus précisément, le procédé selon l'invention concerne le traçage de courbes restreinte, avec découpage des parties de la courbe qui débordent de la fenêtre de visualisation imposée.

L'invention concerne également les circuits de mise en oeuvre du procédé, notamment sous forme de logique cablée ou de circuit intégré.

On connait déjà des procédés de traçage de courbes avec découpage des parties débordantes. Parmi ces procédés, celui qui vient immédiatement à l'esprit consiste à repérer, avant le tracé, les points d'intersection de la courbe avec les bornes de la fenêtre. Ensuite, lors de l'opération de tracé, l'appareil s'abstient d'agir dans les parties débordantes bornées par les points d'intersection préalablement repérés.

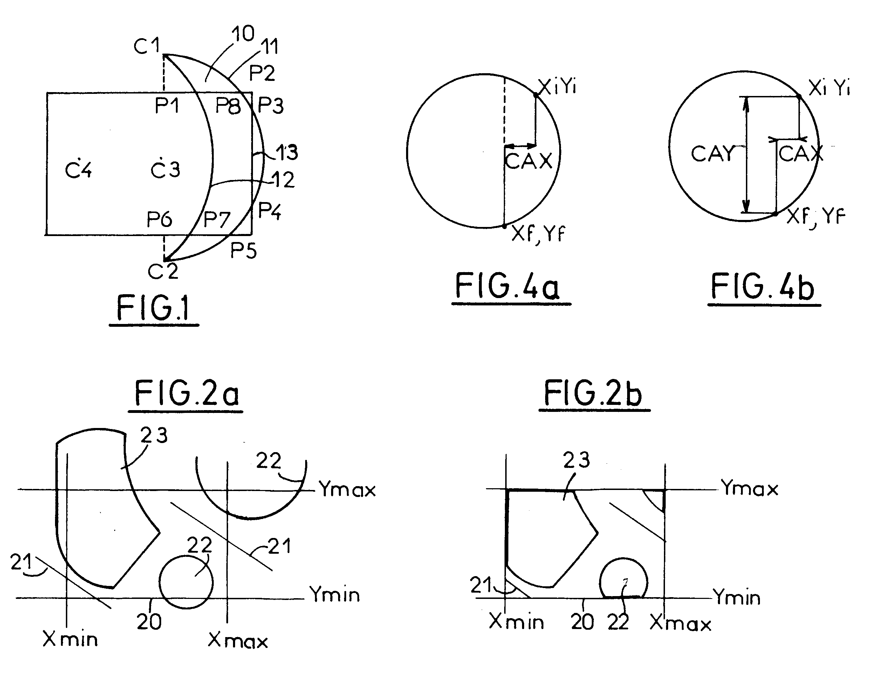

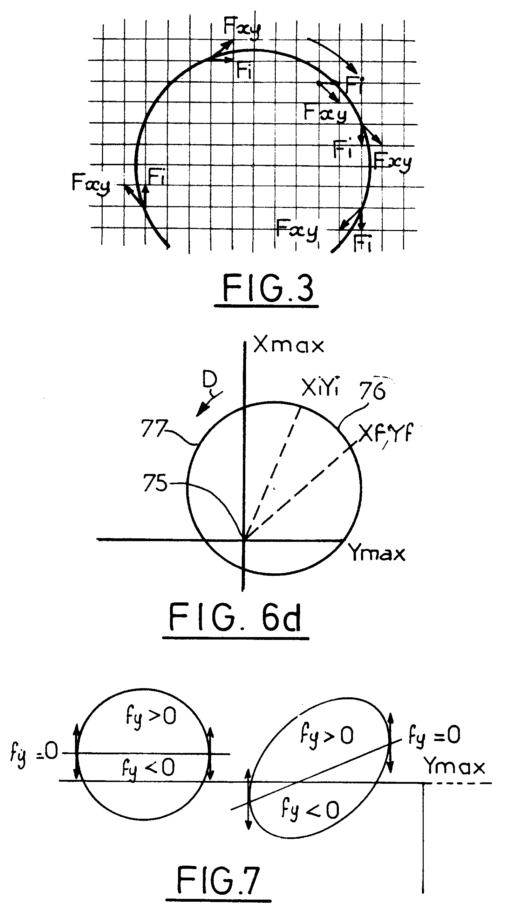

La Fig. 1 illustre la mise en oeuvre de ce procédé connu dans le cas du traçage d'un "croissant de lune" 10 débordant d'une fenêtre rectangulaire 13. Le "croissant de lune" 10 est constitué de deux arcs de cercle 11, 12, franchissant la fenêtre 13 en un certain nombre de points d'intersection ($p_2$, $p_3$, $p_4$, $p_5$, $p_7$, $p_8$). Lors de l'opération de tracé, le procédé consiste à calculer de façon incrémentale l'ensemble des points de en ne traçant effectivement que les parties inscrites dans la fenêtre, et repérées par la rencontre des points d'intersection préalablement calculés.

Or, ce procédé connu présente de nombreux inconvénients du fait essentiellement des contraintes de capacité de mémorisation, ainsi que de la durée et de la complexité de traitement qu'il impose aux appareils de tracé.

En effet, les appareils de tracé travaillent généralement à partir de listes d'affichage contenant les caractéristiques de la courbe à tracer, à savoir l'équation algébrique et/ou les points et paramètres caractéristiques de chacune des portions géométriques simples qui composent la courbe.

L'analyse préalable de la liste d'affichage, et la mémorisation de chacun des points d'intersection de la courbe avec les bornes de la fenêtre, imposent donc d'une part d'alourdir le contenu de la liste d'affichage avec les valeurs nouvelles trouvées, avec l'inconvénient supplémentaire d'utiliser une nouvelle liste de travail différente à chaque fois que changent les paramètres de la fenêtre, ou la position de la courbe mobile dans une fenêtre fixe (animation).

Un autre procédé également défavorable en particulier en regard de la capacité de mémorisation de l'appareil de tracé consiste à calculer tous les points de la courbe y compris les points en débordement, et à les stocker dans une mémoire qui ne serait que partiellement visualisée à un moment donné ; ce procédé ne traite pas de façon optimale le problème de l'animation.

Un autre procédé également défavorable en particulier en regard des temps de traitement liés au calcul, consiste à calculer tous les points de la courbe et à éliminer tous ceux qui sont situés en dehors des limites.

Ce procédé est également défavorable en regard de la méthode de remplissage des surfaces tracées

Le procédé de traçage de courbes de la présente invention a pour objet de remédier à l'ensemble de ces inconvénients.

Plus exactement, un premier objet de l'invention est de fournir un procédé de traçage de courbes débordantes à l'intérieur d'une fenêtre de visualisation, qui optimise le temps de calcul et de tracé. Cet objectif consiste notamment à fournir un procédé qui réduise au minimum les opérations de calcul effectuées sur les parties en débordement en substituant au processus de tracé applicable aux parties inscrites dans la fenêtre, un second processus différent pour le traitement des parties débordantes.

Un autre objet de l'invention est de fournir un procédé de traçage et de découpage des courbes qui n'implique pas des modifications des listes d'affichage, notamment de façon à limiter la capacité de mémorisation requise, et à permettre de traiter aisément les problèmes d'animation.

Un objet complémentaire de l'invention est de fournir un tel procédé de traçage qui soit tout particulièrement adapté au tracé des courbes à équation linéaire du premier et du second degré, en utilisant un matériel d'architecture simple. Le procédé est applicable également aux courbes constituées par l'enchaînement continu de portions géométriques simples du premier et du second degré.

Un autre objet de l'invention est de fournir un procédé qui ferme les contours débordants en les "écrasant" le long de la bordure de la fenêtre de visualisation, de façon à être compatible avec un procédé simple de remplissage des contours.

Dans cet objectif, un objet inventif essentiel de l'invention assurant une minimalisation des capacités requises de mémorisation et de traitement, est de renoncer au suivi point à point des parties débordantes de la courbe pour repérer le retour de la courbe dans la fenêtre, en utilisant à la place un jeu de critères simples permettant de ne localiser que la zone pertinente limitée par le tracé écrasé en bordure de fenêtre.

EP 0 293 283 B1

Ainsi, le tracé "écrasé" qui longe la bordure de fenêtre n'est-il pas effectué par projection point par point de la courbe débordante ; au contraire, dès le débordement, le procédé génère le tracé "écrasé", (c'est-à-dire suit la bordure de fenêtre) de façon automatique, indépendamment de la valeur réelle de la courbe en débordement. De cette manière, le procédé ne prend en compte que la valeur des quelques critères simples retenus, pour contrôler le sens de parcours de la bordure et les conditions de retour du tracé dans la fenêtre. Le tracé écrasé s'effectue donc en quelque sorte "en aveugle", ce qui évite le coût machine (temps de traitement et place mémoire) qu'entraînerait une localisation inutilement précise de la courbe réelle en débordement.

Ces objectifs ainsi que d'autres qui apparaîtront par la suite sont obtenus à l'aide d'un procédé de traçage d'une courbe à l'intérieur d'une fenêtre d'affichage d'un appareil de tracé graphique, la fenêtre d'affichage étant délimitée par des bordures, la courbe étant constituée de portions géométriques simples du premier et/ou du second degré et ayant une partie de courbe s'étendant à l'extérieur de la fenêtre d'affichage, procédé dans lequel:

a)- on définit dans une liste d'affichage chaque portion géométrique par:

. les coordonnées des points caractéristiques (point initial, point final) de la portion géométrique,

. les paramètres de la fonction représentative de la portion géométrique,

. le type de portion géométrique (droite, cercle, ellipse),

. le sens du parcours pour une portion géométrique du second degré;

b)- on définit en outre dans la liste d'affichage, les bordures de la fenêtre d'affichage par des paramètres de bordure;

c)- on détermine à partir d'un point courant de tracé, des incréments (dx,dy) pour obtenir un nouveau point courant de tracé par combinaison des coordonnées du point courant précédent avec les incréments déterminés,

d)- on répète l'étape c) jusqu'à ce que le point courant du tracé coïncide avec le point final de la portion géométrique;

procédé caractérisé en ce que:

e)- préalablement à l'étape c) de détermination d'incréments, on initialise une pluralité de critères de traitement à partir du calcul des dérivées partielles de la fonction au point courant, de la comparaison des coordonnées du point courant avec les paramètres de bordure, de la mesure des excursions entre le point courant et le point final;

f)- pendant l'étape c) on met à jour les critères de traitement en fonction du nouveau point courant, et on détermine, à partir desdits critères de traitement, une information relative à un traitement particulier à effectuer parmi plusieurs traitements possibles, chaque traitement pris séparément déterminant des incréments particuliers et les traitements possibles incluant au moins un traitement pour la partie de portion géométrique contenue dans la fenêtre d'affichage pour engendrer des incréments (dx, dy) minimisant la fonction représentative de la portion géométrique et un traitement pour la partie de portion géométrique s'étendant à l'extérieur de la fenêtre d'affichage qui comprend les étapes de :

g) pour une dite portion géométrique débordant à l'extérieur de la fenêtre d'affichage, détermination de la bordure de fenêtre franchie et de la coordonnée du point courant en débordement ou pour une dite portion géométrique ayant un point initial situé en dehors de la fenêtre, détermination d'un point courant de démarrage du tracé par projection sur la bordure de fenêtre dudit point initial,

h) détermination de la position du point courant par rapport au point final ;

i) génération d'un incrément (dx ou dy) parallèle à la bordure de fenêtre pour réaliser un tracé en écrasement, de la portion géométrique en débordement, le long de la bordure, le signe de l'incrément étant déterminé en fonction dudit positionnement et d'une identification de la concavité de la fonction pour la coordonnée en débordement.

La logique de ce processus accepte en outre les contours situés entièrement à l'extérieur de la fenêtre, ce qui est utile pour les cas où il serait désavantageux, en termes de durée et de complexité de traitement, d'identifier préalablement ces contours.

Selon une caractéristique avantageuse de l'invention, ledit seuil de rebroussement est vérifié en fonction de l'orientation de la concavité de la courbe en bordure de fenêtre, de la position extérieure ou intérieure à la courbe du point courant, de la coordonnée en débordement et de la position relative du point courant et du point final. L'idée d'utiliser ces critères, et leur choix (tels que décrits ici, ou équivalents) permet une économie considérable de traitement puisqu'il évite le suivi point à point des parties débordantes, en limitant l'information traitée au strict nécessaire pour la fermeture du contour et la reprise du tracé intérieur à la fenêtre. Le fonctionnement "en aveugle" correspond en outre au fait que l'on réduit le plus possible le nombre des variables transitoires qui permettent à l'appareil de connaître sa position instantanée de tracé. Comme on le verra par la suite, un gain considérable est également réalisé, grâce à

3

ce processus, lors d'un écrasement des parties débordantes sur un coin de la fenêtre.

Selon l'invention, le procédé ainsi décrit est particulièrement adapté à sa mise en oeuvre sous forme de logique cablée.

Ledit procédé est mis en oeuvre par un circuit tel que revendiqué dans la revendication 13.

D'autres caractéristiques et avantages de l'invention apparaîtront à la lecture suivante d'un mode de réalisation préférentiel de l'invention donné à titre purement illustratif, et des dessins annexés dans lesquels :

- la figure 1 représente le principe de fonctionnement d'un procédé connu décrit en préambule ;
- les figures 2A, 2B illustrent respectivement le positionnement de la fenêtre de visualisation par rapport à des courbes débordantes, et le tracé effectivement obtenu dans la fenêtre ;
- la figure 3 illustre la mise en oeuvre des méthodes de Jordan et Bresenham pour le tracé des parties de courbes inscrites dans la fenêtre de visualisation ;
- les figures 4a, 4b illustrent l'utilisation du critère d'arrêt selon l'invention ;
- les figures 5a, 5b, 5c illustrent les différents cas traités dans le processus d'écrasement des parties débordantes de courbes sur les bordures de fenêtres ;
- les figures 6a, 6b, 6c illustrent la prise en compte de critères d'arrêt au point initial et au point final lors de l'écrasement d'une courbe débordante ;
- la figure 7 illustre l'extension du processus d'écrasement de l'invention au traitement des ellipses débordantes ;
- la figure 8 est un schéma bloc représentant l'architecture d'un système à logique cablée de mise en oeuvre du procédé de traçage suivant l'invention.
- les figures 9A, 9B illustrent l'adéquation du procédé de traçage suivant l'invention pour le remplissage des contours débordants.
- les figures 10A, 10B, 10C illustrent le gain de temps de traitement permis par le procédé de l'invention, en comparaison d'une technique de projection point à point des parties débordantes de la courbe.
- la figure 11 illustre le mode de réalisation de l'invention selon lequel la reprise du processus normal de tracé intervient avant le retour effectif du tracé débordant à l'intérieur de la fenêtre.
- les figures 12A et 12B illustrent les huit cas de branchement du processus normal de tracé simulé par logiciel (table TABRA (INDIC)).
- les figures 13, 14A et 14B illustrent les six cas d'écrasement des tracés débordants selon le processus de tracé en débordement de l'invention.

Le mode de réalisation de l'invention décrit ci-après se rapporte spécifiquement au traçage de courbes, débordantes ou non débordantes, constituées de droites, de cercles, d'ellipses droites, de portions de ces figures géométriques, et/ou d'enchaînements de ces portions, formant ou non des contours.

Toutefois, bien entendu, l'objet de l'invention ne se limite pas au traitement de ces figures.

En figure 2A, la fenêtre 20 est appliquée sur un paysage géométrique, et définie par quatre droites $X_{min}$, $X_{max}$, $Y_{min}$ et $Y_{max}$ qui en constituent la bordure.

Les figures géométriques du paysage à visualiser comprennent par exemple des segments de droite 21, des cercles ou arcs de cercles 22, ainsi qu'un contour complexe 23 constitué de portions droites, circulaires et elliptiques enchaînées.

Comme on note en figure 2B, le procédé de traçage suivant l'invention permet d'assurer la visualisation des seules parties de courbes inscrites dans la fenêtre 20, avec fermeture, le long de la bordure de fenêtre, des contours débordants.

Ces modes de réalisation correspondent par exemple à la représentation de graphiques sur des écrans cathodiques ou des table traçantes, ou encore à la visualisation d'un paysage géométrique, animé ou non, à travers une fenêtre de visualisation fixe ou mobile par rapport au paysage.

La représentation, graphique ou vidéographique, des courbes, est d'autre part supposée être réalisée sous forme d'une succession de points, correspondant par exemple aux pixels d'un écran cathodique. Dans le cas d'une application aux tables traçantes, l'appareil intègre éventuellement la courbe par jonction des différents points calculés.

Les figures 3, 4A et 4B vont permettre dans un premier temps de présenter le processus de traçage des portions de courbes inscrites à l'intérieur de la fenêtre, selon le procédé de l'invention.

Ce processus est constitué par la mise en oeuvre combinée d'une part d'une méthode de sélection, pour chaque pas de tracé, du point ou du pixel le plus proche de la courbe théorique, parmi un jeu de trois possibles, en tenant compte d'autre part, dans le cas du cercle ou de l'ellipse, de la zone de la courbe où se situe le point courant.

4

La méthode de sélection du nouveau point courant parmi trois points est directement dérivée de la méthode présentée dans l'article de B.W. Jordan, W.J. Lennon et B.D. Holm "An improved algorithm for the generation of non parametric curves" IEEE Transaction on Computer vol. C-22, n° 12, December 1973. (On mentionnera simplement que cette méthode consiste à calculer les trois valeurs possibles pour le nouveau point courant de la courbe en cours de tracé, qui correspondent à une incrémentation en dx seul, en dy seul, et en dx, dy simultanément). Parmi ces valeurs, on choisit celle correspondant au point dont les coordonnées (x + dx ; y + dy) minimalisent l'équation $ax^2 + by^2 + cxy + dx + ey + f$, c'est-à-dire à celui des points possibles qui se trouve le plus proche de la courbe.

La seconde méthode qui est combinée, selon l'invention, à la méthode de Jordan, consiste à éliminer préalablement, de façon systématique, l'une des deux possibilités (dx ou dy) de façon à économiser le calcul correspondant de la valeur de la fonction. En effet, parmi les trois directions de tracé correspondant aux trois nouveaux points courants possibles, deux seulement encadrent la direction de la tangente au point de la courbe le plus proche du point courant, et la troisième peut donc être éliminée.

On connait une méthode de sélection décrite par J. E. Bresenham "A linear algorithm for incremental digital display of circular arcs" Communication of the ACM, February 1977, vol. 20, N° 2. (La méthode décrite consiste à utiliser le signe de la fonction aux points correspondant à une incrémentation en dx seul et en dy seul respectivement, pour déterminer laquelle des deux fonctions $F_x = F (x + dx,y)$, et $F_y = F (x, y + dy)$ va être calculée, avec $F_{xy} = F(x + dx, y + dy)$ qui doit toujours être calculée). Toutefois, la méthode décrite ne prend pas en compte les variations de signe des incréments en fonction de la position du point courant sur un cercle ou une ellipse. Le procédé selon l'invention complète donc cette méthode en réalisant le choix de la fonction à calculer $F_x$ ou $F_y$ en fonction du signe de $F_{xy}$, du sens D de parcours du cercle ou de l'ellipse, et du signe des deux dérivées partielles en x et y. Le signe des deux dérivées partielles permet en effet de déterminer celui des quatre quadrants partageant le plan de traçage du cercle dans lequel le point courant se situe. (Chacun des quadrants correspond à une des quatre combinaisons possibles pour le couple formé par les deux signes (SDFX, SDFY) des dérivées partielles (DFX, DFY) de la courbe).

Par suite, si la fonction $F_{xy}$ est strictement positive, c'est-à-dire si le point (x + dx, y + dy) est extérieur à la courbe, la seconde fonction à calculer est la fonction $F_i$ (i = x ou y) qui correspond à un déplacement tendant à faire aller à l'intérieur de la courbe, dans le quadrant considéré ; le choix est inverse dans le cas où la fonction $F_{xy}$ est négative. Enfin, si la fonction $F_{xy}$ est nulle, c'est le point (x + dx, y + dy) qui est retenu pour le tracé du nouveau point courant puisqu'il est exactement situé sur la courbe théorique.

On notera que le choix de la fonction $F_i$ à calculer peut également être réalisé, suivant une autre suggestion de Bresenham, à partir du test d'une variable représentant l'addition de $F_{xy}$ et $F_i$.

L'association de la méthode de Jordan, et de la méthode de Bresenham perfectionnée de la manière qui vient d'être présentée, nécessite en outre un certain nombre d'adaptations pour permettre un traitement de certains cas limites. Il s'agit pour l'essentiel d'une part de la gestion du passage d'un quadrant à un quadrant adjacent, et d'autre part de la mise au point d'un critère d'arrêt du tracé.

On rappelle que les quadrants sont définis par le jeu des quatre combinaisons que peut prendre le couple des signes des dérivées partielles de la fonction. Or, l'utilisation du signe des dérivées partielles, et du sens de parcours D de la courbe, pour déterminer la valeur des deux incréments dx, dy, n'est pas suffisante lorsque l'une ou l'autre des dérivées est nulle. En effet, lorsqu'on se trouve sur un extrêmum, l'un des incréments est indépendant du sens et du signe des dérivées partielles, et ne dépend que de l'extrêmum rencontré.

Le listing du logiciel de simulation présenté plus loin montre l'une des solutions possibles pour lever l'ambiguité, à savoir l'introduction d'un test logique supplémentaire (DFX = 0 ; DFY = 0) prenant en compte le cas où l'une ou l'autre des dérivées partielles est nulle (voir table II,A).

Les figures 4A, 4B illustrent la manière dont le procédé suivant l'invention résout le problème du critère d'arrêt de la courbe tracée.

Selon la méthode de Jordan, l'équation algébrique de la courbe à tracer est initialisée à 0, ce qui revient à dire que le premier point tracé appartient systématiquement à la courbe théorique. Dans ces conditions, il y a peu de chance que le dernier point calculé de la portion de courbe à tracer soit le même que le point final théorique. Si on transpose ce principe d'initialisation au procédé de traçage suivant l'invention, il se pose deux problèmes.

Tout d'abord, le critère d'arrêt ne pourrait être réalisé que le long d'une direction privilégiée unique, où le franchissement d'un seuil indique le dépassement du point final théorique. Or, ceci ne suffit pas à lever le doute pour déterminer, dans le cas des courbes fermées (notamment des cercles), lequel des deux points de la courbe de même abscisse respectivement coordonnée vient d'être franchi. Ceci impliquerait un test supplémentaire quand au quadrant où se trouve le point courant.

D'autre part, le défaut majeur de la méthode est qu'elle n'implique pas de passer par le point final, et donc n'assure pas un enchaînement continu entre plusieurs portions de courbes concaténées.

Selon l'invention, et comme illustré par la simulation présentée en tables I à VI, le problème du critère d'arrêt est résolu en initialisant l'équation algébrique de la portion de courbe en cours de tracé à une valeur qui provoque le passage par le point final ; pour cela, on calcule la valeur de l'équation algébrique en prenant en compte que la valeur de la fonction au point théorique final est nulle (voir table $III_B.2.$).

En outre, pour la vérification du critère d'arrêt, il est nécessaire de fournir deux informations supplémentaires, qui sont les mesures des excursions en nombre d'incréments (par exemple en pixels) entre le point de départ et le point d'arrivée, sur les deux coordonnées (CAX = $x_i$-$x_f$ ; CAY = $y_i$-$y_f$ ; l'indice i représentant le point courant, et l'indice f le point théorique final). En cours de tracé, les variables de mesure CAX et CAY sont gérées comme les coordonnées qui leur sont associées, et suivent les mêmes règles d'incrémentation et de décrémentation (voir par exemple table $V_0$ (a), (b), (c), (d)).

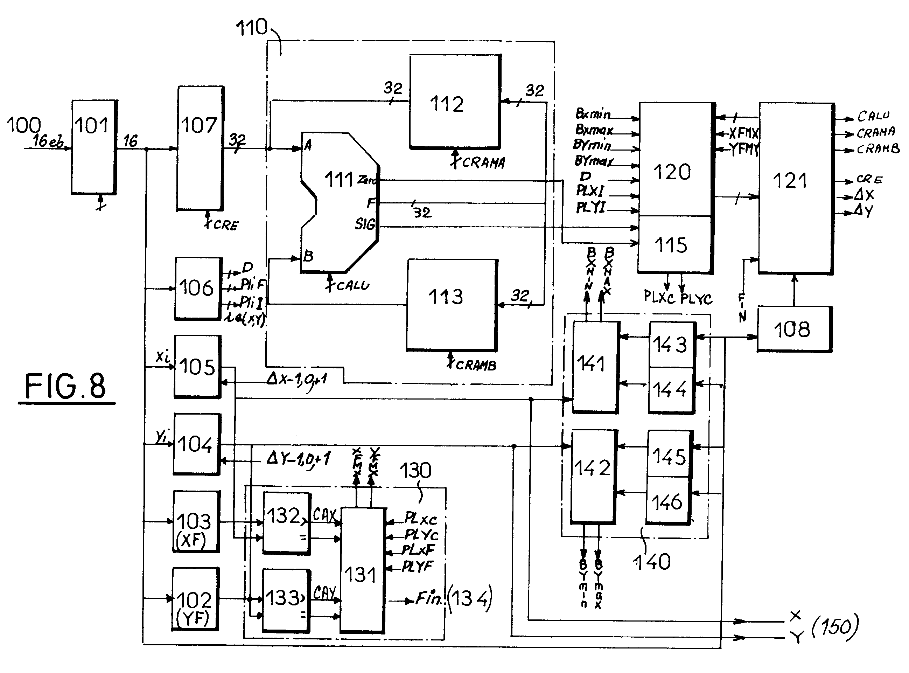

Tout moyen équivalent permettant la vérification du critère d'arrêt convient, comme par exemple la comparaison directe des coordonnées du point courant et du point final (cf. Fig.8).

La mise au point du procédé suivant l'invention nécessite également de pouvoir résoudre le cas où le point de départ et le point final sont confondus, ce qui se produit pour un arc de courbe nul ou pour une courbe fermée (avant ou après transformation géométrique, dans le cas par exemple où les ellipses sont obtenues par application d'une transformation géométrique sur un cercle). Il y a donc lieu de discriminer, avant transformation géométrique, si l'arc qu l'on a à tracer est un petit arc ou un grand arc, de façon à éliminer les arcs nuls.

Le coeur de la présente invention est constitué par le processus de traitement des parties de la courbe qui débordent de la fenêtre de visualisation.

L'objectif de ce processus est de générer de façon incrémentale les points qui seront tracés sur la bordure de fenêtre franchie par les parties en débordement, de façon à rejoindre le point final en suivant la projection de la courbe sur la bordure. Si la courbe revient dans la fenêtre, l'algorithme doit alors permettre de reprendre le suivi de la courbe à l'aide du procédé de traçage qui vient d'être décrit. Le processus de traitement des parties débordantes permet également de gérer l'initialisation et l'arrêt du procédé pour une courbe ou une portion de courbe comportant un point initial et/ou final en débordement.

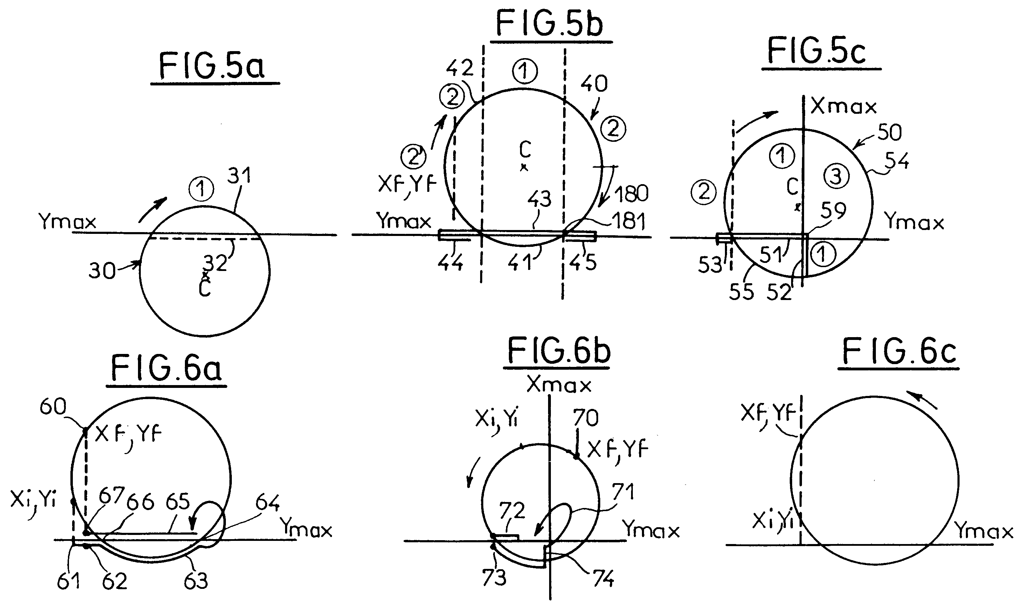

Les figures 5A, 5B, 5C, illustrent, dans le cas d'un tracé de cercle, les différents cas de débordement.

En figure 5A, le cercle 30 est, pour l'essentiel, situé à l'intérieur de la fenêtre de visualisation c'est-à-dire en deça de la ligne de bordure de fenêtre $Y_{max}$. L'arc principal du cercle 30 est donc tracé à l'intérieur de la fenêtre selon le procédé de traçage décrit ci-dessus.

En revanche, lorsque l'appareil de tracé mettant en oeuvre le procédé suivant l'invention détecte le franchissement des bords de la fenêtre, le processus de traitement des parties débordantes est activé. Ce processus de traitement assure l'écrasement de la partie débordante 31 le long de la bordure de fenêtre, de façon à former le tronçon de droite 32 (représenté en pointillés), qui ferme le contour. L'arc 31 n'est pas tracé.

Dans le cas de la figure 5B, l'essentiel du cercle 40 est situé en dehors de la fenêtre. Lorsque, après avoir tracé la portion 41 du cercle 40 située à l'intérieur de la fenêtre, l'appareil de tracé détecte le franchissement de la bordure de fenêtre, l'écrasement de la partie débordante 42 consiste alors, dans une version non optimisée, à tracer non seulement le tronçon de jonction 43 assurant la fermeture du contour en coopération avec l'arc de cercle 41 mais également deux tronçons dédoubles 44, 45, situés de part et d'autres du tronçon 43 de fermeture. Le dédoublement des tronçons 44, 45 s'explique par le fait que, dans la zone correspondante (zone 2), pour une abscisse X donnée correspondent deux points de l'arc sur la partie débordante.

Enfin, la figure 5C présente la configuration dans laquelle le cercle 60, dont la majeure partie est située en dehors de la fenêtre, déborde au niveau du coin de fenêtre 59.

A la différence des procédés déjà existants, le procédé suivant l'invention permet d'éviter le tracé des portions dédoublées 44, 45, 53, et de supprimer le calcul inutile de projection successive de tous les points de l'arc 54 sur le même coin de fenêtre 59. La projection réalisée se limite donc de façon optimale aux tronçons de fermeture 51, 52.

En fait, dans le procédé selon l'invention, on ne peut plus parler de projection des parties débordantes du cercle, mais bien plutôt de simples tracés de jonction (32, 43, 51 + 59 + 52) limités au strict nécessaire, et réalisés indépendamment de la configuration de la partie débordante de la courbe.

La logique du procédé suivant l'invention correspond à la succession des trois étapes suivantes :
- analyse de la situation lors du franchissement d'une bordure de fenêtre, afin de déterminer le sens de parcours de la bordure par le tracé écrasé (en fonction du quadrant courant, et de la position du point final).

- poursuite "en aveugle" des incrémentations le long de la bordure de fenêtre, jusqu'à
- vérification des conditions de reprise de l'algorithme normal ou vérification du critère d'arrêt.

A cet égard, l'existence d'un arrêt en débordement nécessite un traitement préalable de façon à homogénéiser le test du critère d'arrêt en débordement avec le test du critère d'arrêt détaillé ci-dessus à propos du procédé de traçage des parties de courbe inscrites à l'intérieur de la fenêtre de visualisation.

La détection et l'analyse du franchissement de la bordure de fenêtre par la courbe sont réalisées aussi bien lors de la sortie de la courbe, que lors de sa rentrée à l'intérieur de la fenêtre.

La sortie de la fenêtre est détectée lorsque l'une des coordonnées X ou Y de la courbe sort de l'intervalle $(x_{min}$-$x_{max})$ ; $(y_{min}$-$y_{max})$, respectivement (table $IV_{1.1}$).

Ensuite, le procédé consiste à déterminer de quel côté est tournée la concavité de la courbe au point courant par rapport à la fenêtre dans le cas du cercle ou de l'ellipse, c'est-à-dire à prévoir si la projection de la partie débordante va former un tronçon dédouble 44, 45, 53, ou non. Un exemple de simulation de ce test est à trouver en table $IV_{1.2}$, le quadrant courant étant identifié par la valeur du couple des signes des dérivées partielles de la fonction au point courant.

Dans le cas où le test de détermination de la concavité permet de conclure que la partie débordante du cercle appartient seulement à une zone 1, c'est-à-dire correspond à un arc de cercle débordant dont la concavité est tournée vers la fenêtre, le tronçon "écrase" est réalisé en appliquant uniquement l'incrément dx ou dy parallèle à la bordure de fenêtre, qui prend la valeur +1 ou -1 en fonction de la dérivée associée à la coordonnée en débordement (Voir tables $V_{8,9,10,11}$).

Dans le cas où l'identification de la concavité indique que la projection de l'arc de cercle débordant forme un tronçon dédoublé 44, 45, 53, le procédé prévoit un "rebroussement" de l'incrémentation, afin d'éviter le tracé inutile. Plus précisément, à la différence du cas précédent, l'incrément parallèle à la bordure de fenêtre va se voir affecter la valeur inverse (-1, ou +1).

L'appareil de tracé va alors directement tracer le tronçon 43 à la suite de l'arc de cercle intérieur 41 (fig. 5B), ou encore le tronçon 51 à la suite de l'arc intérieur 55 (fig. 5C), sand excursion inutile en 44 et 53 respectivement.

Dans le cas où le centre du cercle se trouve sur la bordure de fenêtre, il subsiste une ambiguïté, qui est levée de façon connue en apportant un terme de correction. En outre, le rebroussement est également subordonné à la condition que le point final de la portion de courbe à tracer ne se trouve pas en zone 2 de la partie débordante (fig. 5B). Ce cas sera traité plus loin.

Dans le procédé selon l'invention, les critères de retour au processus normal de tracé, en dehors de la détection du point final, sont les suivants :

- l'incrément dx, dy correspondant à la coordonnée en débordement (x, ou y respectivement) doit ramener le tracé vers la fenêtre ;
- l'incrément courant sur la coordonnée qui n'est pas en débordement doit correspondre à l'incrément au point d'intersection de la courbe avec la limite de la fenêtre. Cette condition est expliquée plus en détail ci-après.

L'utilisation de ces deux conditions de reprise du processus normal de tracé correspond à une simplification encore accrue des traitements. En effet, la reprise du processus normal ne nécessite ainsi le suivi que de deux paramètres, et ceci bien entendu sans que les coordonnées théoriques du point courant du cercle débordant soit connues, puisque le processus de tracé en débordement fonctionne "en aveugle". Ces deux conditions permettent de prendre en compte aussi bien la configuration de la figure 5A (cercle à faible débordement) que celle de la figure 5B (cercle à débordement majoritaire).

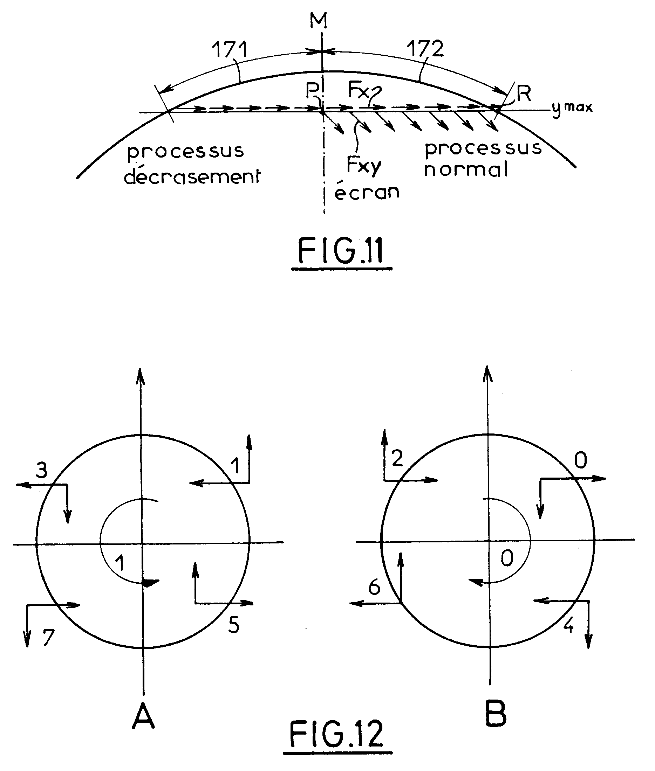

La première condition (incrément sur la coordonnée en débordement dirigeant vers la fenêtre) a pour effet de commander la reprise du processus normal de tracé dès le dépassement de l'extrémum en débordement, dans le cas d'un débordement minoritaire. Ceci résulte du fait que, dans le cas où la concavité de la partie débordante de la courbe est tournée vers la fenêtre, comme représenté en figure 11, l'application de l'algorithme combiné de Jordan + Bresenham sur la branche débordante 172 de retour assure automatiquement la poursuite du tracé écrasé depuis l'extrêmum M jusqu'au point R de rentrée effective dans la fenêtre. Plus précisément, les fonctions de Jordan calculées pour cette branche 172 sont Fx et Fxy, la fonction Fy étant ignorée pour le quadrant courant. Or l'application de ces deux fonctions à un point P écrasé sur la fenêtre conduit à choisir systématiquement la fonction Fx, qui minimalise la distance entre le nouveau point tracé et la courbe théorique tant que la courbe débordante reste extérieure à la fenêtre. De cette manière, la fermeture du contour, par écrasement de la courbe débordante sur la bordure de fenêtre, se poursuit continuement, indépendamment de la substitution du processus normal de tracé au processus de tracé en débordement.

Bien entendu, dès le retour du tracé à l'intérieur de la fenêtre, aux alentours du point R, l'une et l'autre des fonctions Fx et Fxy seront alternativement retenues pour générer le tracé du quadrant courant. On notera en outre que, suivant la résolution de l'appareil de traçage et suivant la pente de retour dans la fenêtre de la branche débordante 172, le tracé écrasé pourra être interrompu soit légèrement avant, soit légèrement après le franchissement du point R.

La deuxième condition de retour (le demi-cercle courant doit couper la bordure de fenêtre) permet de prendre en compte la condifuration de débordement majoritaire (figure 5b). On notera en effet que cette condition est systématiquement remplie dans le cas d'un débordement minoritaire (Fig.5A et Fig.11).

Dans le cas des courbes débordantes à concavité tournée vers l'extérieur (Fig.5b) la reprise du processus normal de tracé ne doit pas intervenir dès le franchissement de l'extremum en débordement. Au contraire, le processus de tracé en débordement doit être maintenu, de façon à pouvoir atteindre le tracé des portions dédoublées 44, 45 et de façon à symétriser les conditions de rebroussement, en entrée et sortie de débordement. En conséquence, la reprise du processus normal ne doit intervenir que lorsque le point théorique courant appartient à la moitié inférieure 180 de la branche de retour. ( en fait, du fait de l'élimination du tracé dédoublé 45, cette condition est remplie immédiatement après le rebroussement en 181).

Dans un mode de réalisation avantageux de l'invention, la discrimination entre la moitié supérieure (non référencée) et la moitié inférieure 180 de la branche de retour s'effectue en utilisant un drapeau PLX (débordement en X) ou PLY (débordement en Y). Ces drapeaux PLX, PLY ne prennent pour valeur que 0 ou 1. De façon conventionnelle, la valeur 0 indique que le point théorique courant est situé dans le demi-cercle interceptant la bordure de fenêtre. La valeur 1 correspond au demi-cercle supérieur.

Bien entendu, le drapeau PLX, PLY ne prend jamais la valeur 1 dans le cas des cercles à débordement minoritaire (Fig.5A; fig.11).

Ce mécanisme correspond au cas du tracé d'arcs de cercles ou d'ellipses débordants.

Le procédé de traçage des portions de courbes inscrites à l'intérieur de la fenêtre reprend ensuite comme déja décrit.

Les drapeaux PLX, PLY permettent également de traiter de façon optimale la projection de la zone 3 de la figure 5C (débordement en coin de fenêtre). En effet, lorsque les comparateurs du procédé (Table $IV_{1.1}$) détectent un débordement en coin de fenêtre, il y a simplement remise à jour des drapeaux PLX PLY selon un ordre qui dépend de la concavité par rapport aux deux bornes franchies ($x_{max}, y_{max}$) et du sens de parcours. Les conditions pour que les drapeaux PLX PLY soient inversés sont que la concavité au point courant soit tournée vers l'extérieur de la fenêtre, et que l'incrément sur l'autre direction fasse sortir de la fenêtre (Tables $VI_{12}$, $VI_{13}$).

A côté de la détection de franchissement de la fenêtre, et la gestion des incréments d'excursion du tracé sur la fenêtre, le processus de traitement suivant l'invention comprend également un traitement du critère d'arrêt en débordement.

En effet, il est nécessaire de vérifier le critère d'arrêt sur la bordure de fenêtre lorsque le point final est situé en dehors de l'écran.

Les compteurs CAX CAY, ou leurs comparateurs équivalents qui servent à contrôler ce critère vont donc être initialisés en prenant en compte non pas le point final théorique situé en dehors de l'écran, mais sa projection sur la bordure de fenêtre. (Table $IIIB_{4,7}$).Toutefois, cette projection est insuffisante à discriminer entre les deux points de même projection d'une zone 2 en débordement. En conséquence, la projection préliminaire du point final sur la bordure de fenêtre s'accompagne du repérage de la valeur des drapeaux PLX, PLY au point final théorique (Table $IIIB_6$).

Les figures 6a 6b illustrent deux configurations dans lesquelles le point final 60, 70, de coordonnées ($x_f$, $y_f$) se trouve en débordement, respectivement dans les zones 2 et les zones 3.

Dans le cas de la figure 6a, le tracé commence en 61 (point initial $x_i$, $y_i$ en débordement). En 62, le point tracé vérifie les coordonnées de la projection du point final 60, mais le drapeau PLX a la valeur 0, et ne coïncide pas avec la valeur du drapeau PLXF de point final. Le procédé commande donc la poursuite du tracé, avec traçage de l'arc de cercle inscrit 63, rebroussement en 64, tracé du tronçon écrasé 65, et poursuite du tracé en écrasement, au delà du point de retour 66 de la courbe dans la fenêtre, jusqu'à rejoindre la projection 67 du point final 60. Au point 67, le drapeau PLX du point courant coïncide avec le drapeau PLXF préalablement calculé du point final. On notera qu'en 66 la condition de rebroussement n'a pas été vérifiée, du fait que le point final 60 se trouve dans la zone 2 située au delà des points 66.

Le raisonnement à tenir est identique pour la figure 6b, à la différence que le point final 70 se trouve projeté au coin supérieur de fenêtre 71. Le tracé effectivement réalisé se limite donc au tronçon écrasé 72, à l'arc de courbe inscrit 73, au second tronçon écrasé 74, et au point de coin de fenêtre 71.

Dans le cas de la figure 6C, c'est également le drapeau PLX qui sert à distinguer la projection des points initial ($x_i$, $y_i$), et final ($x_f$, $y_f$).

Dans le cas de la figure 6D, où les points initial et final sont tous deux en zone 3, et donc projetés au même point 75 du coin de fenêtre, on conçoit qu'il est nécessaire de discriminer entre le cas où l'arc de cercle à tracer est le petit arc de cercle 76 entièrement extérieur à la fenêtre, de celui où il s'agit du grand arc de cercle complémentaire 77. Dans ce cas, c'est l'information sur le sens D du tracé qui permet de distinguer entre les deux cas.

La description des caractéristiques du procédé de traçage de l'invention, telle qu'elle vient d'être décrite, est spécifiquement relative au cas où la courbe à tracer est un cercle ou un arc de cercle. Bien entendu, l'objet de l'invention ne se limite pas à cette configuration, et s'étend notamment à toutes les courbes où portions de courbes du second degré dont la fonction s'exprime sous la forme $F(x,y) = ax^2 + by^2 + cxy + dx + ey + f = 0$

Ainsi, le procédé décrit pour le cercle peut notamment parfaitement être généralisé au cas des ellipses.

Toutefois, les ellipses nécessitent une adaptation du traitement en débordement présente pour le cercle, du fait que, à coordonnées constantes, la dérivée partielle ne varie pas dans le cas du cercle, tandis qu'elle change dans le cas général de l'ellipse (voir figure 7) :

$$f_x = 2ax + cy$$
$$f_y = 2by + cx.$$

Cette variation de la dérivée partielle se traduit par un changement des propriétés de l'ellipse à ses points d'intersection avec les bornes de la fenêtre. Cette variation est bien prise en compte dans le calcul des dérivées partielles, mais elle doit aussi être prise en compte dans la gestion des drapeaux PLX et PLY. Ceux-ci indiquent en permanence si les signes respectifs des dérivées partielles de la fonction au point calculé et au point théorique de l'ellipse sont identiques ou opposés. Le processus de traitement des parties débordantes doit donc comporter une condition supplémentaire de changement d'état des drapeaux PLX et PLY, à savoir le changement du signe des dérivées partielles $f_x$ et $f_y$ lors du déplacement sur la bordure de fenêtre.

On devra en outre veiller à utiliser une résolution d'affichage ou de tracé suffisante vis-à-vis de l'échelle de l'ellipse. En effet, lorsque cette résolution est trop grossière, il existe des risques de bouclage du processus de traitement, particulièrement dans les extrémités fines de l'ellipse.

Les tables I à VI annexées à la présente demande présentent un logiciel de simulation du procédé de l'invention, écrit en langage PASCAL. Toutefois, le procédé suivant l'invention est destiné à être préférentiellement mis en oeuvre sous forme de logique cablée, comme représenté en figure 8.

Le logiciel de simulation est présenté de la manière suivante :
- TABLE I: définition des variables utilisées ;
- TABLE IIA: procédure de calcul du signe des dérivées partielles ;
- TABLE IIB: procédure "ou exclusif" ;
- TABLE IIIA: entrée des données, et initialisation des paramètres utiles au tracé pour le cercle ;
- TABLE IIIB: prise en compte des conditions finales ;
- TABLE IIIC: initialisation des paramètres utiles au tracé pour la droite ;
- TABLE IV: tracé de la primitive : positionnement des variables logiques définissant l'état de l'automate de calcul des points;
    et le calcul de l'état de l'automate ;
- TABLE $V_0$ à $V_{16}$ traitements relatifs aux différents états de l'automate ;
- TABLE VI vérification du critère de fin.

Chacune des tables est pourvue de commentaires détaillés expliquant chaque phase du procédé de telle façon que tout spécialiste comprenne immédiatement la signification de chaque pas de programme.

La simulation est organisée autour d'un programme principal débutant en table IV, d'un programme d'entrée des données et de traitement préliminaire (tables IIIA, IIIB, IIIC), ainsi que de deux procédures définissant chacune respectivement le processus de calcul du signe des dérivées partielles (table IIA), et l'expression logique "OU EXCLUSIF" (table IIB). Ces deux procédures ont été isolées du programme principal, du fait qu'il y est fréquemment fait appel au cours de la mise en oeuvre de la simulation du procédé de traçage suivant l'invention.

Ce logiciel de simulation a été limité à l'application du procédé de traçage à deux types de courbes : les segments de droite, et les cercles et arcs de cercles et les arcs d'ellipse. Dans le cas du cercle $a = b = 1$, $c = 0$.

En conséquence, les tables d'entrée des données (tables III) comportent d'une part le processus d'initialisation pour le cercle (table IIIA), et pour la droite (table IIIC). L'initialisation pour le cercle consiste à déterminer le quadrant du point de départ, pour calcul des dérivées partielles ($IIIA_{2,3}$), et éventuellement à

projeter le point de départ sur la bordure de fenêtre, lorsqu'il est en débordement. Dans ce dernier cas, les calculs correspondants de quadrant et d'initialisation des drapeaux PLX PLY sont également assurés (IIIA$_{4,8}$).

Dans le cas de la droite, le programme de simulation calcule la valeur des dérivées partielles (IIIC$_1$), projette, le cas échéant le point initial en débordement (IIIC$_2$), puis calcule la valeur des compteurs CAX, CAY par rapport aux coordonnées du point final (X$_f$,Y$_f$) (IIIC$_3$).

La prise en compte des conditions finales, dans le cas d'un cercle, à déjà été commentée. L'objectif de cette partie du processus est d'initialiser le tracé de façon à faire coïncider le point final tracé avec le point final théorique (IIIB$_2$), puis, le cas échéant, de projeter le point final en débordement avec détermination des quatre paramètres de reconnaissance (x$_f$, y$_f$, PLX, PLY). (IIIB$_{4,6}$).

Le coeur du logiciel de simulation est constitué d'une boucle ("REPEAT"..."UNTIL") qui est parcourue successivement pour chaque point de la courbe à tracer. L'ensemble des paramètres de la courbe ou portion de courbe a été préalablement défini par lecture du contenu de la liste d'affichage (IIIA$_1$). La liste d'affichage est lue une seule fois; elle n'est pas modifiée par la mise en oeuvre du procédé de l'invention.

Le tracé effectif de la courbe est destiné à être utilisé par un automate (figure 8), qui fournit la valeur des incréments permettant de tracer chaque nouveau point de la courbe à partir du point précédent, jusqu'à rencontre du point final, en fonction des variables logiques de positionnement.

Ces variables logiques assurent respectivement la détection du débordement éventuel du point courant (IV$_{1.1}$), la détermination du quadrant courant (IV$_{1.2}$), et la prise en compte de la valeur des drapeaux PLX et PLY, ainsi que du sens de tracé (IV$_{1.3}$).

Les autres variables, calculées en table IV, qui servant à la détermination de l'état de l'automate, correspondent à une mise à jour des paramètres après vérification de la condition de rebroussement.

Comme expliqué précédemment, l'existence ou non d'un rebroussement est fonction de quatre paramètres : le sens de tracé de la courbe, le quadrant du point courant, le signe de la fonction, la valeur courante des drapeaux PLX PLY, et l'existence éventuelle d'un point final en zone 2 ou 3. Chacun des cas correspondant aux différentes combinaisons possibles pour ces quatre paramètres est traité dans une expression logique (LSAUX, LSAUY) IV$_{2.1}$.

L'état de l'automate est ensuite déterminé par prise en compte de la totalité des variables utiles, avec aiguillage, pour chaque état de l'automate, vers un sous-programme différent, au moyen d'une table d'adressage (IV$_3$).

Les traitements spécifiques à chaque état de l'automate figurent ensuite dans les tables V$_0$ à V$_{16}$, de façon à fournir les nouvelle valeurs des coordonnées (x,y) du nouveau point à tracer, ou les nouvelles valeurs des variables PLX et/ou PLY.

Les huit premiers cas (table V$_0$ à V$_7$) correspondent aux différents cas déterminés par le signe des dérivées partielles de la fonction, le sens de parcours, c'est-à-dire les différents cas de l'algorithme de Jordan. Ces huit situations sont illustrées en figure 12, et dans la table logique ci-dessous.

## TABLE A

VALEURS DES VARIABLES D'ENTREE ET DE SORTIE POUR LES CAS 0 A 7 DE LA TABLE DE BRANCHEMENT TABRA (INDIC).(fig.12A et 12B)

| VARIABLES D'ENTREE | | | : | VARIABLES DE SORTIE | | | : | CAS |
|---|---|---|---|---|---|---|---|---|
| SDFX | SDFY | SENS | : | incx | incy | entx | : | |
| 0 | 0 | 0 | : | 0 | 1 | 0 | : | 0 |
| 0 | 0 | 1 | : | 1 | 0 | 1 | : | 1 |
| 0 | 1 | 0 | : | 0 | 0 | 1 | : | 2 |
| 0 | 1 | 1 | : | 1 | 1 | 0 | : | 3 |
| 1 | 0 | 0 | : | 1 | 1 | 1 | : | 4 |
| 1 | 0 | 1 | : | 0 | 0 | 0 | : | 5 |
| 1 | 1 | 0 | : | 1 | 0 | 0 | : | 6 |
| 1 | 1 | 1 | : | 0 | 1 | 1 | : | 7 |

Les variables d'entrée SDFY, SDFX, et SENS correspondent respectivement aux signes de la dérivée en y et en x, et au sens de parcours des cercles des figures 12A,12B.

Les variables de sortie incx incy représentent la valeur des incréments en x et en y, en fonction du quadrant courant (déterminé par le couple SDFY, SDFX), et du sens de parcours. Par convention, incx et incy prennent la valeur 0 pour un incrément positif, et la valeur 1 pour un incrément négatif. La variable de sortie entx indique qu'elle est la fonction entrante (Fx ou Fy) qui sera retenu selon Bresenham. Par convention, la valeur 0 indique que la fonction entrante est : Fy, et la valeur 1 : Fx.

Ces huit cas détaillés en table A et en figure 12A, 12B correspondent à la mise en oeuvre du processus normal de tracé à l'intérieur de la fenêtre.

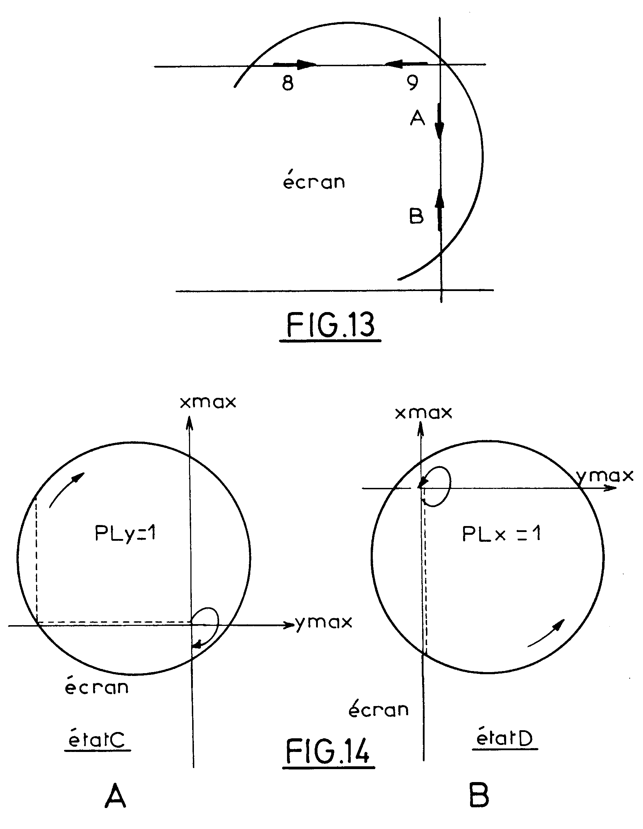

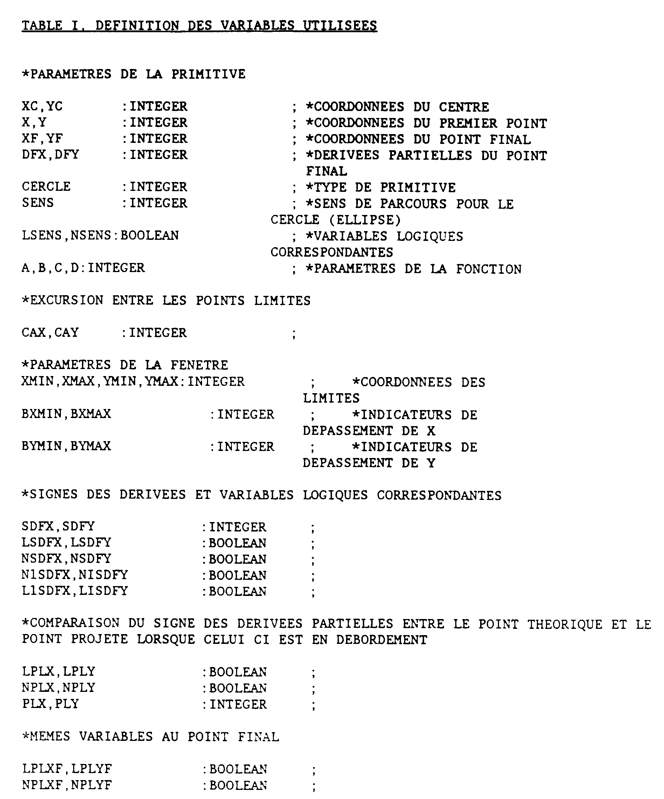

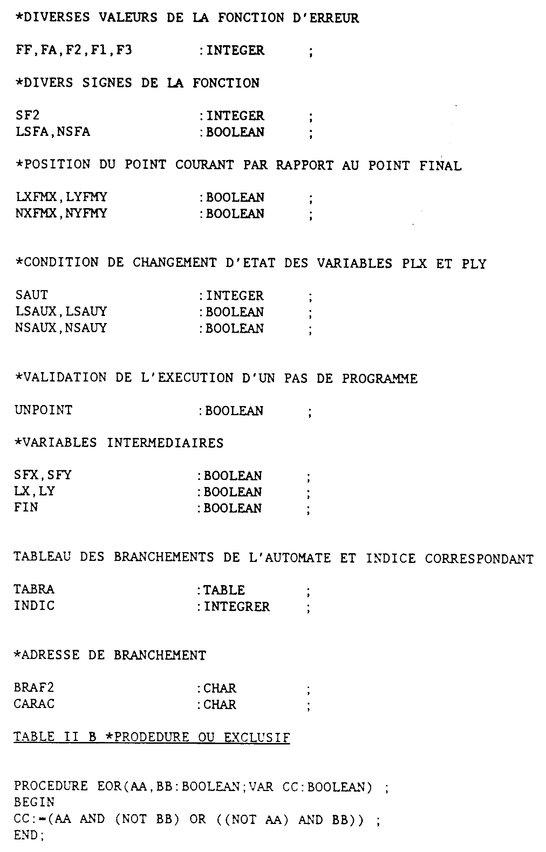

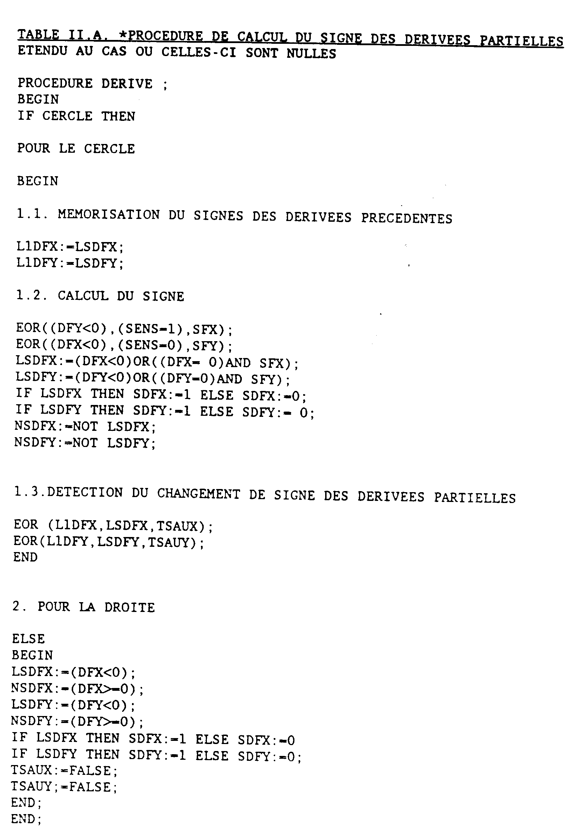

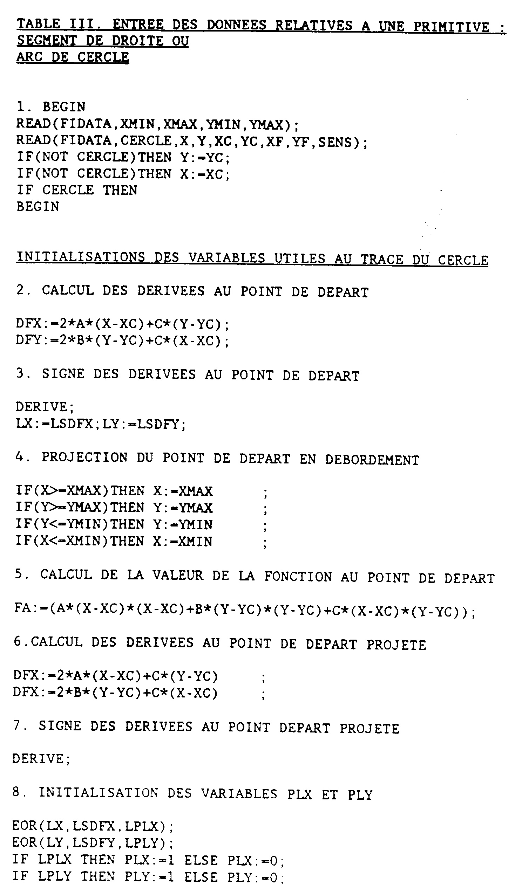

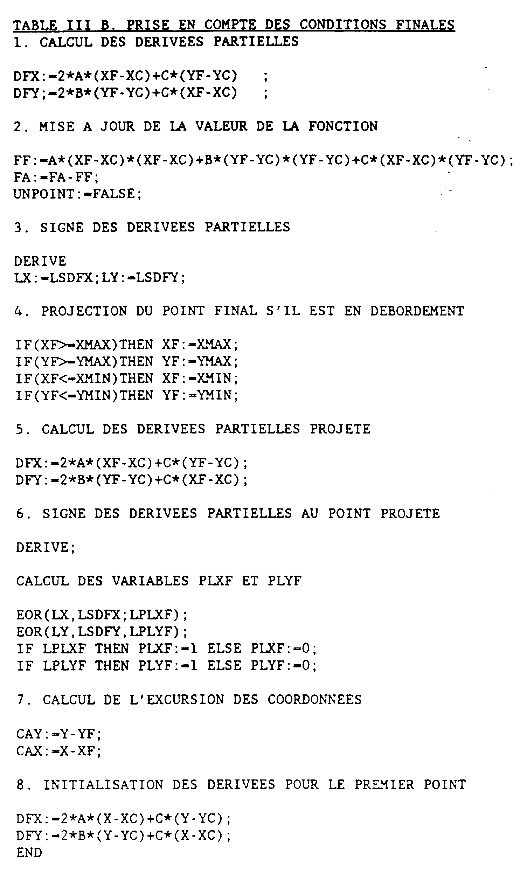

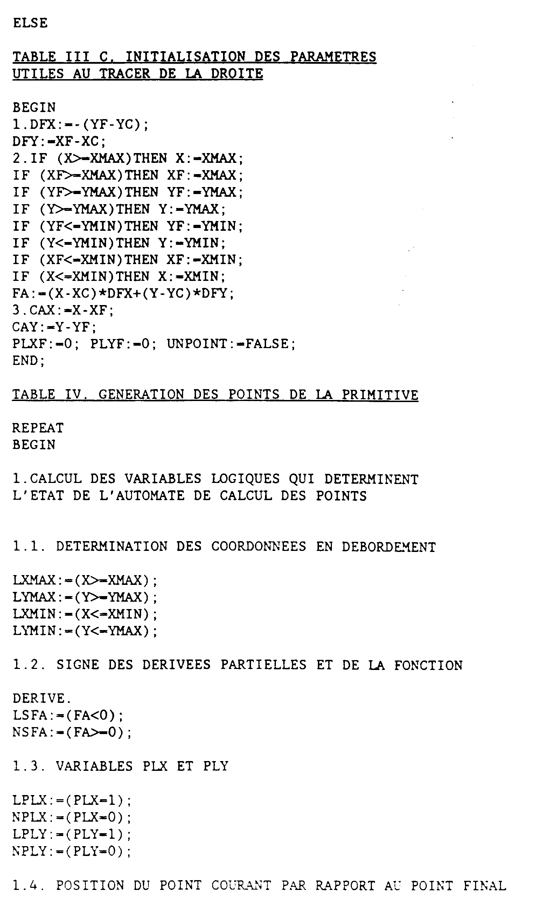

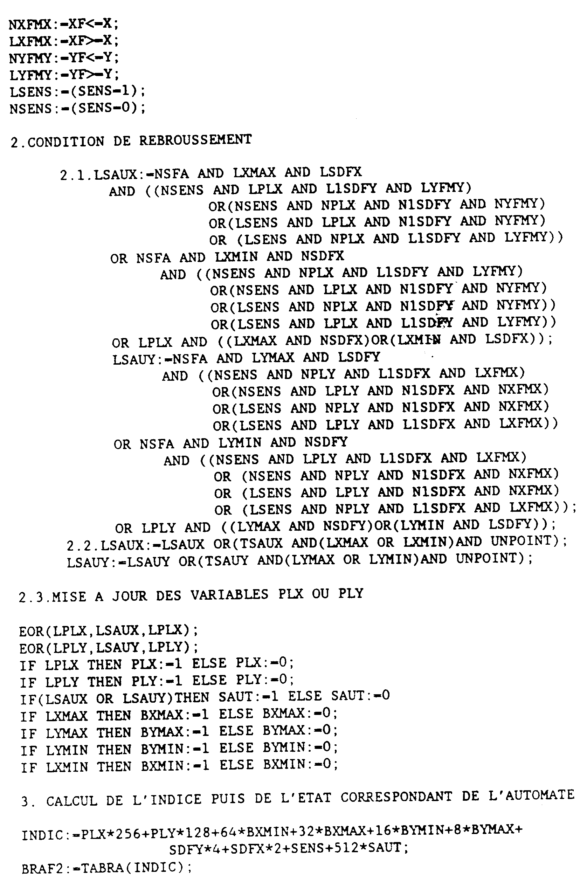

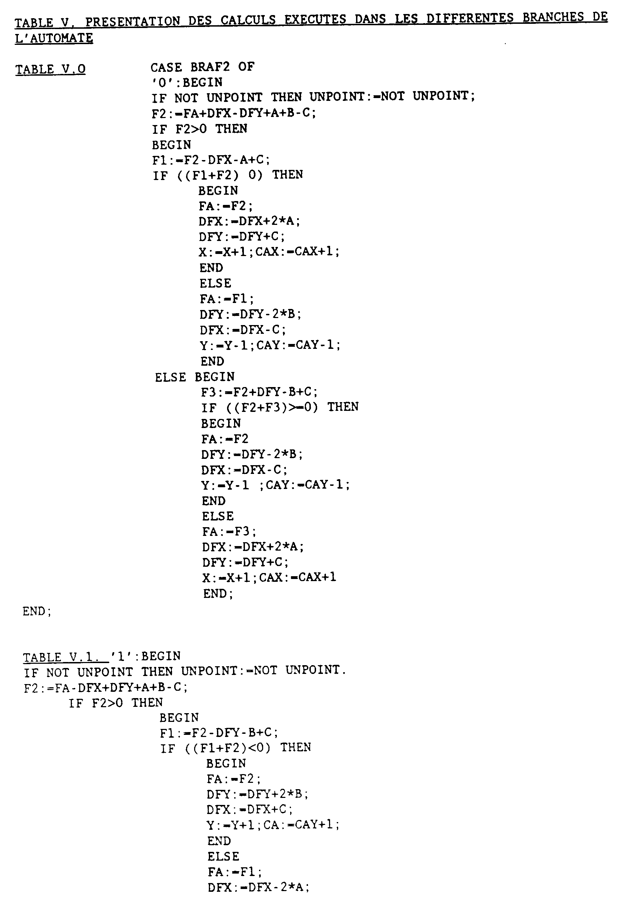

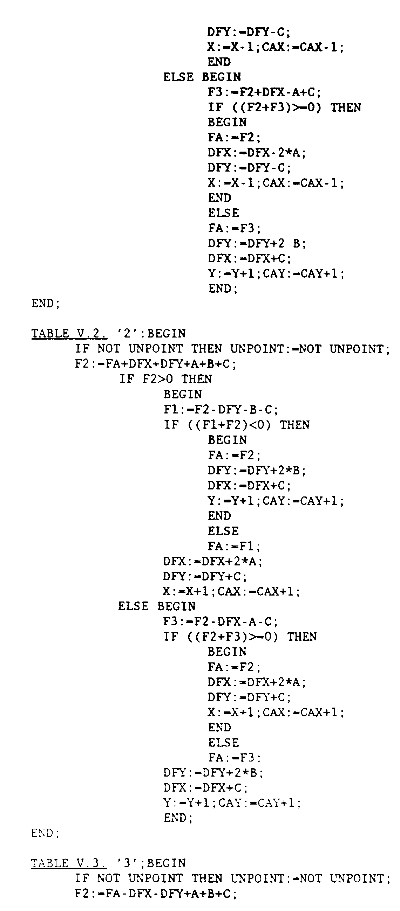

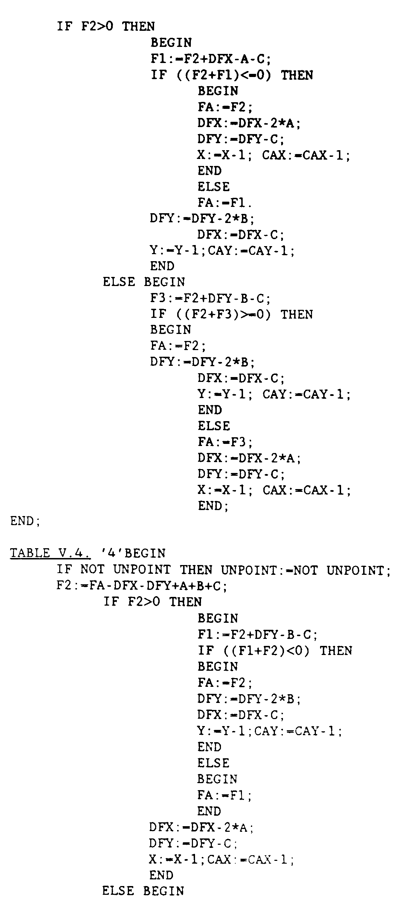

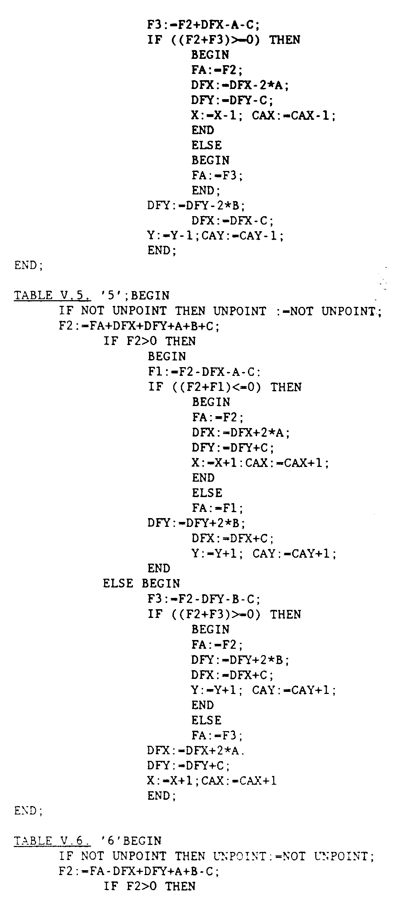

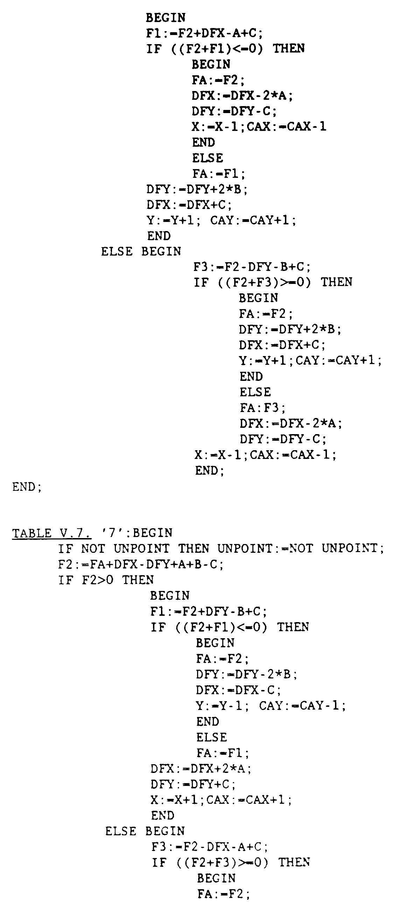

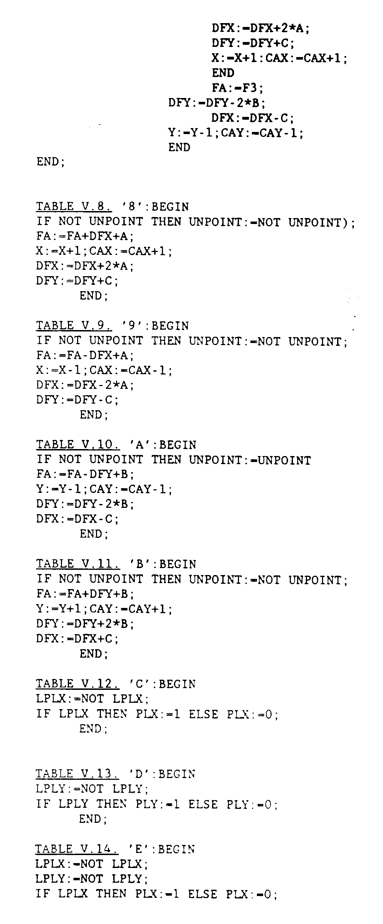

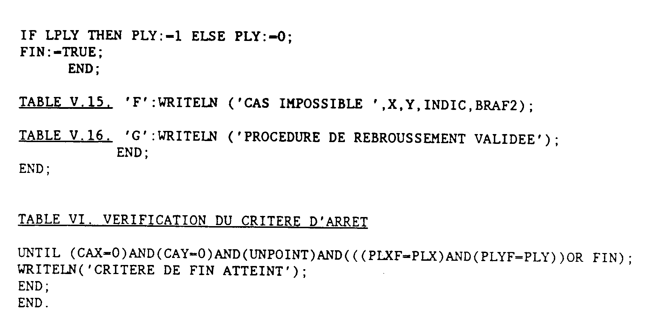

La figure 13 illustre les cas 8, 9, A et B (tables $V_{8,9,10,11}$) du tableau de branchement TABRA (INDIC). Il s'agit en l'occurence du fonctionnement en mode "aveugle", les cas 8 et 9 correspondant respectivement à un incrément et à un décrément en x sur la bordure de fenêtre, et les cas A et B à un décrément, et à un incrément en y.

Les cas C et D sont illustrés respectivement en figure 14A et 14B, et correspondent au franchissement d'un coin de fenêtre, avec mise à jour des variables PLY, PLX, respectivement (cf tables $V_{12,13}$).

Outre les cas E et F (table $V_{14, 15}$) de tests, le cas G correspond à la situation de rebroussement des tracés, c'est-à-dire de sauts permettant d'éviter le tracé d'une portion écrasée dédoublée.

Le contenu total de la table TABRA (INDIC) figure en table B.

<u>**TABLE B (SAUT = 0)**</u>

**PLX = 0          PLY = 0**

```
0  1  2  3  4  5  6  7  0  9  8  3  4  8  9  7
8  1  2  9  9  5  6  8  F  F  F  F  F  F  F  F
A  1  B  3  4  B  6  A  A  9  C  3  4  D  9  A
D  1  B  9  9  B  6  C  F  F  F  F  F  F  F  F
0  B  2  A  A  5  B  7  0  C  8  A  A  8  D  7
8  B  2  D  C  5  B  8  F  F  F  F  F  F  F  F
F  F  F  F  F  F  F  F  F  F  F  F  F  F  F  F
F  F  F  F  F  F  F  F  F  F  F  F  F  F  F  F
```

**PLX = 0          PLY = 1**

```
F  F  F  F  F  F  F  F  F  F  F  F  8  9  8  9
9  8  9  8  F  F  F  F  F  F  F  F  F  F  F  F
F  F  F  F  F  F  F  F  F  F  F  F  D  9  C  9
9  D  9  C  F  F  F  F  F  F  F  F  F  F  F  F
F  F  F  F  F  F  F  F  F  F  F  F  8  C  8  D
C  8  D  8  F  F  F  F  F  F  F  F  F  F  F  F
F  F  F  F  F  F  F  F  F  F  F  F  F  F  F  F
F  F  F  F  F  F  F  F  F  F  F  F  F  F  F  F
```

**PLX = 1          PLY = 0**

```
F  F  F  F  F  F  F  F  F  F  F  F  F  F  F  F
F  F  F  F  F  F  F  F  F  F  F  F  F  F  F  F
F  F  A  B  F  F  A  B  F  F  A  C  F  F  A  D
F  F  D  B  F  F  C  B  F  F  F  F  F  F  F  F
B  A  F  F  B  A  F  F  C  A  F  F  D  A  F  F
B  D  F  F  B  C  F  F  F  F  F  F  F  F  F  F
F  F  F  F  F  F  F  F  F  F  F  F  F  F  F  F
F  F  F  F  F  F  F  F  F  F  F  F  F  F  F  F
```

**PLX = 1          PLY = 1**

```
F  F  F  F  F  F  F  F  F  F  F  F  F  F  F  F
F  F  F  F  F  F  F  F  F  F  F  F  F  F  F  F
F  F  F  F  F  F  F  F  F  F  F  F  F  F  D  C
F  F  C  D  F  F  F  F  F  F  F  F  F  F  F  F
F  F  F  F  F  F  F  F  F  F  F  F  C  D  F  F
D  C  F  F  F  F  F  F  F  F  F  F  F  F  F  F
F  F  F  F  F  F  F  F  F  F  F  F  F  F  F  F
F  F  F  F  F  F  F  F  F  F  F  F  F  F  F  F
```

12

## TABLE B (suite)
## (SAUT = 1)

PLX = 0      PLY = 0

```
G G G G G G G G G G G G G G G G
G G G G G G G G G G G G G G G G
G G G G G G G G G G G G G G G G
G G G G G G G G G G G G G G G G
G G G G G G G G G G G G G G G G
G G G G G G G G G G G G G G G G
G G G G G G G G G G G G G G G G
G G G G G G G G G G G G G G G G
```

PLX = 0      PLY = 1

```
G G G G G G G G G G G G G G G G
G G G G G G G G G G G G G G G G
G G G G G G G G G G G G G G G G
G G G G G G G G G G G G G G G G
G G G G G G G G G G G G G G G G
G G G G G G G G G G G G G G G G
G G G G G G G G G G G G G G G G
G G G G G G G G G G G G G G G G
```

PLX = 1      PLY = 0

```
G G G G G G G G G G G G G G G G
G G G G G G G G G G G G G G G G
G G G G G G G G G G G G G G G G
G G G G G G G G G G G G G G G G
G G G G G G G G G G G G G G G G
G G G G G G G G G G G G G G G G
G G G G G G G G G G G G G G G G
G G G G G G G G G G G G G G G G
```

PLX = 1      PLY = 1

```
G G G G G G G G G G G G G G G G
G G G G G G G G G G G G G G G G
G G G G G G G G G G G G G G G G
G G G G G G G G G G G G G G G G
G G G G G G G G G G G G G G G G
G G G G G G G G G G G G G G G G
G G G G G G G G G G G G G G G G
G G G G G G G G G G G G G G G G
```

Bien entendu, la table TABRA (INDIC) peut aussi bien être remplacée par un jeu d'équations, ou par tout autre procédé de branchement.

Dans une autre version du logiciel de simultation, il serait envisageable de traiter également le critère de fin de tracé dans une table élargie.

Comme on le constate donc, la logique de la routine de tracé est parfaitement indépendante des paramètres de la fenêtre, qui n'interviennent que comme variables, ce qui permet notamment d'éviter une modification de la liste d'affichage. Le procédé réduit également de façon substantielle les durées et la complexité de traitement, par rapport au procédé de calcul préliminaire des points d'intersection de la courbe avec la fenêtre, du fait de la simultanéité du traitement du découpage avec le processus de tracé.

La figure 8 représente le schéma bloc d'un mode de réalisation préférentiel d'un circuit en logique cablée mettant en oeuvre le procédé suivant l'invention.

Le circuit admet en entrée les mots de commande du traçage, à savoir le contenu du la liste d'affichage :

- nature de la courbe ;
- attributs de la courbe (couleur, fond, sens de parcours...) ;
- coordonnées des points caractéristiques.

Dans le mode de réalisation représenté, on suppose que les calculs d'initialisation ont déjà été réalisés. Ceci signifie que, dans le cas du cercle par exemple, le point de départ réel $(x_i, y_i)$ a été calculé, et éventuellement projeté ; le signe des dérivées partielles au départ est connu ; la valeur de la fonction a été calculée ; et le point final a été identifié. et éventuellement projeté. Bien entendu, ces opérations d'initialisation peuvent aussi bien être menées à bien dans l'automate de la figure 8.

En sortie du tampon 101, situé après un module d'initialisation, les mots de commandes et les valeurs sont envoyés sélectivement à des registres de stockage des coordonnées du point final 102, 103, des coordonnées du point initial calculé 104, 105 (mémorisé dans un registre incrémenteur décrémenteur), et d'état des drapeaux PLX, PLY aux points initial et final, ainsi que l'information du sens du tracé D (106), et la nature de la courbe (108). Les données d'initialisation de la valeur de la fonction au point initial (FA), ainsi que de la valeur des dérivées partielles DFX, DFY, et la valeur des paramètres de l'équation de la courbe à tracer sont introduites dans le transformateur 107 assurant une extension à 32eb de façon à permettre un traitement par l'Unité Arithmétique Logique 111 du module de calcul 110.

Le module 110 comporte en outre deux mémoires RAM 112 113 qui jouent le rôle de registres de mémorisation des valeurs de calcul de l'itération précédente et des paramètres de l'équation. Ces mémoires sont employées pour calculer les valeurs des fonctions et des dérivées pour chaque nouveau point à tracer.

En effet, les équations suivantes sont préférentiellement utilisées pour chaque itération : avec $a = 1$, $b = 1$, $c = 0$ dans le cas du cercle.

DERIVEES PARTIELLES :

$$(DFX) \quad fx(i + l) = fx(i) + 2^*a^*dx + c^*dy$$
$$(DFY) \quad fy(i + l) = fy(i) + 2^*b^*dy + c^*dx$$

avec dx et dy $= +1,0,-1$

PRIMITIVE :

$$Fx(i + l) = Fa + fx(i)^*dx + a^*dx^2$$
$$Fy(i + l) = Fa + fy(i)^*dy + b^*dy^2$$
$$Fxy(i + l) = Fa + fx(i)^*dx$$
$$+ fy(i)^*dy + a^*dx^2 + b^*dy^2 + c^*dx^*dy$$

avec:
  i: itération courante ;
  Fa: valeur de la fonction au point d'itération i ;
  a,b,c: constantes de l'équation algébrique de la courbe au second degré ;
  dx,dy: incréments de tracé.

Ce sont ces équations itératives qui sont utilisées dans le logiciel de simulation (voir par exemple la Table $V_0$, le calcul des valeurs $F_2$, et $F_1$ ou $F_3$ de la fonction, et des dérivées partielles DFX, DFY).

Ces valeurs calculées par le module 11 pour le point courant sont ensuite stockées dans les mémoires 112, 113, pour servir de paramètres de calcul à l'itération suivante. Le séquencement de l'unité 111 et des mémoires 112 113 est effectué au moyen des ordres de commande CALU, CRAMA, CRAMB en provenance du module 121 de logique de séquencement de l'automate.

14

Le signe des valeurs calculées par le module 111 ainsi que le résultat de leur comparaison avec la valeur réelle sont envoyés au module 115 ; il en déduira en cours de calcul :
- le signe étendu des variables SDFX, SDFY
- les incréments dx et dy
- la direction d'incrémentation (ENTX) et le choix du point à écrire qui donne la plus petite valeur de la fonction
- les valeurs des variables PLX et PLY.

Les circuits 132 et 133 sont alimentés respectivement par le registre incrémenteur décrémenteur x 105 et le registre 103 de stockage de l'abcisse xf du point final pour le circuit 132, et par les registres équivalents Y 104 et 102 pour le circuit 133.

Ils fournissent respectivement la position du point courant par rapport au point final (TAB IV$_{1.4}$) ainsi que les valeurs (x = xf), (y = yf) qui indiquent leur coïncidence. Le circuit logique 131 fournit à partir des signaux x = xf et y = yf ainsi que des drapeaux PLX, PLXF, PLY, PLYF une information de fin de tracer 134.

Le module 140 détecte le débordement de la courbe, au moyen de circuits comparateurs 141, 142 travaillant d'une part sur les paramètres de la fenêtre de visualisation stockés dans les registres 143, 144, 145, 146 et d'autre part sur la valeur des coordonnées du point courant en provenance des registres 105, 104, (Table IV$_{1.1}$).

L'ensemble des variables logiques fournies par le module 130 des critères d'arrêt, le module 140 de détection de débordement, et le registre 106, est fourni au module logique 120 de détermination du changement d'état de l'automate. Ce module logique effectue la détermination de l'état de l'automate (Table IV$_3$ du logiciel de simultation) en fonction des variables logiques BXMIN, BXMAX, BYMIN, BYMAX, D, XFMX,YFMY, et des valeurs courantes des drapeaux PLX, PLY déterminées itérativement à partir de leur valeur au point initial PLXI, PLYI ainsi que des valeurs issues du circuit 115 SDFX, SDFY, SFA (Table IV$_{2.3}$). Le module fournit alors l'information d'état de l'automate (cas 0 à cas G) au module de séquencement 121. Celui-ci en déduit alors les valeurs des incréments dx, dy à fournir aux registres incrémenteurs-décrémenteurs 105, 104.

Le module 121 assure également, comme déjà mentionne, le séquencement des circuits 111, 112, 113 et du circuit transformateur 107 et plus généralement de l'ensemble..

Les incréments dx, dy fournis au registre 104 105 permettent d'obtenir les coordonnées (x,y) du nouveau point tracé (150), qui sont fournies au module de traçage de l'appareil de tracé graphique et vidéographique, ou analogue. Ces mêmes valeurs sont réintroduites dans les modules 130, 140 pour les calculs de la nouvelle itération.

Les incréments dx/dy peuvent également être sortis en 150.

La mise en oeuvre du procédé suivant l'invention dans le circuit représenté en figure 8 permet d'optimiser substantiellement les temps de calcul, et de simplifier au maximum l'architecture du matériel.

A l'exception de la phase d'initialisation, la réalisation d'une itération par ce circuit nécessite un temps moyen de calcul de 10 microsecondes à 20 microsecondes,à partir du logiciel de simulation. La réalisation matérielle définitive à base des circuits de la figure 8 permet d'atteindre des temps de calcul de l'ordre de 300 à 500 ns. Ce temps peut encore être amélioré si les fonctions sont intégrées dans un circuit unique.

Les paramètres de la fenêtre sont fournis au processeur de tracé, indépendamment du contenu de la liste d'affichage, et sans rétroaction sur celle-ci. Ceci permet en particulier de structurer en pipe line les différents processeurs liés à un système de visualisation graphique.

Comme déjà mentionné en préambule, le procédé suivant l'invention est particulièrement adapté à l'optimisation du remplissage des surfaces fermées débordantes.

En effet, l'opération de remplissage est généralement effectuée par relecture des contours, ceux-ci ayant été stockés avec gestion de la parité du nombre de points sur chaque ligne ou chaque colonne selon le sens de balayage pour le remplissage.

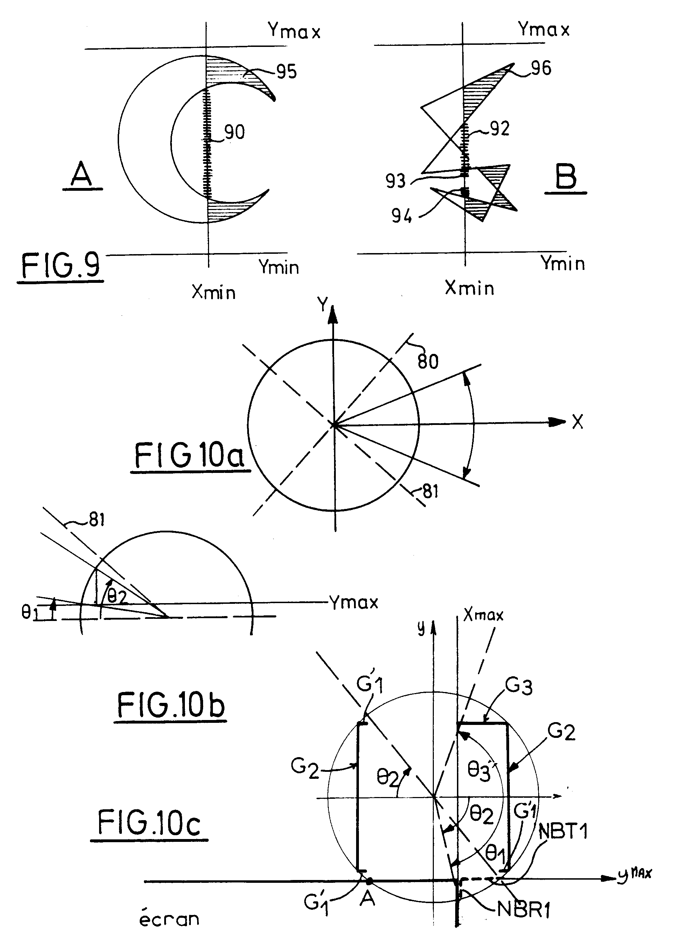

Or, le processus de projection des parties débordantes sur la bordure de fenêtre, tel qu'il est décrit ici, assure un stockage de points avec un "ou exclusif" qui assure le contrôle de parité, et automatise le remplissage des parties visibles des surfaces inscrites dans les contours. (Fig.9A, 9B)

Les gains en temps de traitement permis par le procédé suivant l'invention, en comparaison des procédés existant de projection systématique de tous les points débordants, ont également été calculés .

Le nombre de points économisés grâce au procédé se calcule différemment, par exemple dans le cas du tracé d'un cercle débordant, pour chacun des quadrants délimités par les droites 80, 81 orientées à 45° et à 135° (FIG 10A). Ces droites délimitent en effet les zones pour lesquelles les pentes en Y sont inférieures (ou supérieures respectivement) aux pentes en X.

Plus précisement, les zones où l'on économise des calculs de points, -du fait de la génération automatique de points écrasés avec incréments systématiquement parallèles à la bordure de fenêtre, au lieu d'une projection point à point de la courbe débordante - dépendent, selon la direction de débordement, de la comparaison des dérivées partielles en X et en Y. En effet, sous la diagonale 81 de la figure 10B, le nombre de points qui seraient calculés selon la méthode de Jordan s'exprime par :

$$NBT = R (\sin\theta_2 - \sin\theta_1),$$

du fait que la méthode conduit à retenir systématiquement un incrément en Y,
alors que le nombre de points écrasés calculés selon l'invention est :

$$NBE = R (\cos\theta_2 - \cos\theta_1)$$

puisque le tracé écrasé s'effectue exclusivement par incréments en X.
Le gain en nombre de points calculés est donc :

$$G = (NBT - NBE) * 2$$

L'exemple de la figure 10C permet d'illustrer encore d'avantage le gain de calcul obtenu, dans le cas d'un cercle débordant parcouru dans le sens trigonométrique, et présentant différents cas rencontrés :
- gain $G_1$ : zone de débordement, où la concavité est tournée vers l'intérieur (PLX = 0).
- gains $G'_1$, $G_2$, $G_3$ : concentration des parties débordantes dans le point d'angle de fenêtre.
- gains $G'_1$, $G_2$, $G'_1$ : zone de débordement où la concavité, au point de franchissement de la bordure de fenêtre, est tournée vers l'extérieur. En outre, aucun tracé écrasé n'est réalisé à gauche du point A de retour du tracé dans la fenêtre.
La somme de ces gains permet alors d'obtenir le nombre total de points économisés :

$$GT = R (4. 2^{1/2} - \cos\theta_3 - 3\cos\theta_2).$$

Le procédé de traçage de courbes débordantes selon l'invention assure donc non seulement une diminution des capacités de mémorisation requises ( du fait du fonctionnement en "aveugle"), mais permet en outre une accélération du temps de traitement du fait de la réduction du nombre de points calculés.

**Revendications**

1. Un procédé de traçage d'une courbe à l'intérieur d'une fenêtre d'affichage d'un appareil de tracé graphique, la fenêtre d'affichage étant délimitée par des bordures, la courbe étant constituée par l'enchaînement continu de portions géométriques simples du premier et/ou du second degré et ayant une partie de courbe s'étendant à l'extérieur de la fenêtre d'affichage, procédé dans lequel:
   a)- on définit dans une liste d'affichage chaque portion géométrique par:
      . les coordonnées des points caractéristiques (point initial, point final) de la portion géométrique,
      . les paramètres de la fonction représentative de la portion géométrique,
      . le type de portion géométrique (droite, cercle, ellipse),
      . le sens du parcours pour une portion géométrique du second degré;
   b)- on définit en outre dans la liste d'affichage, les bordures de la fenêtre d'affichage par des paramètres de bordure;
   c)- on détermine à partir d'un point courant de tracé, des incréments (dx,dy) pour obtenir un nouveau point courant de tracé par combinaison des coordonnées du point courant précédent avec les incréments déterminés,
   d)- on répète l'étape c) jusqu'à ce que le point courant du tracé coïncide avec le point final de la portion géométrique;
   procédé caractérisé en ce que:
   e)- préalablement à l'étape c) de détermination d'incréments, on initialise une pluralité de critères de traitement à partir du calcul des dérivées partielles de la fonction au point courant, de la comparaison des coordonnées du point courant avec les paramètres de bordure, de la mesure des excursions entre le point courant et le point final;
   f)- pendant l'étape c) on met à jour les critères de traitement en fonction du nouveau point courant, et on détermine, à partir desdits critères de traitement, une information relative à un traitement particulier à effectuer parmi plusieurs traitements possibles, chaque traitement pris séparément déterminant des incréments particuliers et les traitements possibles incluant au moins un traitement pour toute portion géométrique contenue dans la fenêtre d'affichage pour engendrer des incréments (dx, dy) minimisant la fonction représentative de la portion géométrique et un traitement pour la partie de portion géométrique débordant à l'extérieur de la fenêtre d'affichage qui comprend les étapes de :

g) pour une dite portion géométrique débordant à l'extérieur de la fenêtre d'affichage, détermination de la bordure de fenêtre franchie et de la coordonnée du point courant en débordement ou pour une dite portion géométrique ayant un point initial situé en dehors de la fenêtre, détermination d'un point courant de démarrage du tracé par projection sur la bordure de fenêtre dudit point initial,

h) détermination de la position (XFMX, YFMY) du point courant par rapport au point final ;

i) génération d'un incrément (dx ou dy) parallèle à la bordure de fenêtre pour réaliser un tracé en écrasement, de la portion géométrique en débordement, le long de la bordure franchie, le signe de l'incrément étant déterminé en fonction de ladite position (XFMX, YFMY) et d'une identification (PLX, PLY) de la concavité de la fonction pour la coordonnée en débordement.

2. Le procédé selon la revendication 1, dans lequel l'étape e) d'initialisation inclut les étapes suivantes:
- détermination du quadrant de départ par calcul des dérivées partielles de la fonction au point initial;
- projection du point initial sur une bordure de la fenêtre d'affichage si le point de départ est en débordement;
- projection du point final sur une bordure de la fenêtre d'affichage si le point final est en débordement;
- mesure des excursions entre le point initial et le point final.

3. Le procédé selon la revendication 2, dans lequel le traitement particulier pour la partie de portion géométrique à l'intérieur de la fenêtre d'affichage consiste à déterminer les incréments (dx,dy) à partir de trois configurations d'incrémentation possibles,puis à sélectionner parmi les trois configurations possibles, celle fournissant le nouveau point courant le plus proche de la courbe selon la méthode de Jordan, après élimination automatique d'une des configurations d'incrémentation au moyen de la méthode Bresenham complétée par la prise en compte du sens du parcours de la portion géométrique (pour une portion géométrique du second degré) et du signe des dérivées partielles au point courant (quadrant).

4. Le procédé selon la revendication 3, dans lequel les critères de traitement incluent en outre l'utilisation de drapeaux (PLX,PLY) représentatifs de la concavité de la portion géométrique en rapport avec les bordures de la fenêtre d'affichage, la valeur des drapeaux étant calculée à partir du signe des dérivées partielles au point courant.

5. Le procédé selon la revendication 4, dans lequel, les critères de traitement incluent en outre un critère d'arrêt du tracé, un critère de rebroussement de la portion géométrique, un critère de reprise du tracé à l'intérieur de la fenêtre d'affichage.

6. Le procédé selon la revendication 5, dans lequel le critère d'arrêt du tracé est vérifié par la coïncidence des paramètres du point courant (X,Y,PLX,PLY) avec les paramètres du point final projeté (Xf,Yf,PLXf,PLYf).

7. Le procédé selon la revendication 5, dans lequel le critère de rebroussement de la portion géométrique est vérifié en fonction de l'orientation de la concavité de la portion géométrique en bordure de fenêtre, de la position extérieure ou intérieure du point courant par rapport à la portion géométrique, du débordement du point courant et de la position relative du point courant et du point final.

8. Le procédé selon la revendication 5, dans lequel le critère de reprise du tracé à l'intérieur de la fenêtre est vérifié pour le tracé d'un arc de cercle ou d'ellipse quand:
- l'incrément courant correspondant à la coordonnée en débordement dirige le tracé vers la fenêtre;
- le tracé projeté courant correspond à un demi-cercle (demi-ellipse) coupant la bordure de la fenêtre et que le point final n'est pas situé au delà de la bordure.

17

**9.** Le procédé selon la revendication 5, dans lequel le traitement particulier d'une portion géométrique en débordement dans un coin de fenêtre se limite à la mise à jour immédiate de la valeur des drapeaux (PLX,PLY) après le tracé d'un point unique dans le coin de la fenêtre.

**10.** Le procédé selon la revendication 9, dans lequel le signe de l'incrément pour le tracé en écrasement est fonction de la valeur du drapeau (PLX,PLY), ledit incrément automatique (dx ou dy) étant de même signe que l'incrément correspondant pour le quadrant courant lorsque la concavité de la portion géométrique est tournée vers l'intérieur de la fenêtre au niveau de la bordure de la fenêtre (PLY et/ou PLY = 0), et de signe contraire à l'incrément correspondant lorsque la concavité de la courbe est tournée vers l'extérieur de la fenêtre à l'intersection avec la bordure de la fenêtre (PLX et/ou PLY = 1).

**11.** Le procédé selon la revendication 1, dans lequel la valeur de la fonction au point initial du tracé est initialisée de telle façon que la valeur de la fonction au point final théorique d'affichage est nulle pour permettre la détection de l'arrêt du tracé d'une portion géométrique par coïncidence parfaite du point final théorique avec un point du tracé.

**12.** Le procédé selon la revendication 4, dans lequel, le test de coïncidence du point final théorique avec un point du tracé, pour la détection de l'arrêt du tracé d'une portion géométrique, s'effectue sur les coordonnées (X,Y) du point du tracé, et sur la valeur des drapeaux (PLX,PLY).

**13.** Un circuit de mise en oeuvre d'un procédé de traçage d'une courbe à l'intérieur d'une fenêtre d'affichage d'un appareil de tracé graphique, la fenêtre d'affichage étant délimitée par des bordures, la courbe étant constituée par l'enchaînement continu de portions géométriques simples du premier et/ou du second degré et ayant une partie de courbe s'étendant à l'extérieur de la fenêtre d'affichage, ledit circuit étant réalisé sous forme de logique cablée et recevant en entrée (100) le contenu d'une liste d'affichage définissant chaque portion géométrique par:
   . les coordonnées des points caractéristiques (point initial, point final) de la portion géométrique,
   . les paramètres de la fonction représentative de la portion géométrique,
   . le type de portion géométrique (droite, cercle, ellipse),
   . le sens du parcours pour une portion géométrique du second degré;
et définissant en outre les bordures de la fenêtre d'affichage par des paramètres de bordure, ledit circuit fournissant en sortie (150) les coordonnées (x, y) et/ou les incréments dx, dy (-1, 0, 1) de chaque point courant à tracer lesdits incréments (dx,dy) permettant d'obtenir un nouveau point courant de tracé par combinaison des coordonnées du point courant précédent avec les incréments déterminés, et le calcul desdits incréments étant répété jusqu'à ce que le point courant du tracé coïncide avec le point final de la portion géométrique, ledit circuit logique étant caractérisé par : des moyens d'initialisation d'une pluralité de critères de traitement à partir du calcul des dérivées partielles de la fonction au point courant, de la comparaison des coordonnées du point courant avec les paramètres de bordure, de la mesure des excursions entre le point courant et le point final, des moyens de mise à jour des critères de traitement, en fonction du nouveau point courant, et de détermination, à partir desdits critères de traitement, d'une information relative à un traitement particulier à effectuer parmi plusieurs traitements possibles, et caractérisé par des moyens de traitement comprenant un module logique (120) de détermination logique de la valeur des incréments en fonction de l'état des variables logiques suivantes : variables (BXMIN, BXMAX, BYMIN, BYMAX) de position du point courant par rapport à la fenêtre ; variable (D) d'information sur le sens de tracé de la courbe ; drapeaux d'identification de la demi-ellipse ou du demi-cercle (PLX, PLY) du tracé projeté courant, variables (XFMX, YFMY) de positionnement du point courant par rapport au point final, le signe de la fonction, le signe des dérivées partielles, la comparaison des valeurs de la fonction correspondant aux deux directions d'incrémentation, chaque traitement pris séparément déterminant des incréments particuliers et les traitements possibles incluant au moins un traitement pour toute portion géométrique contenue dans la fenêtre d'affichage pour engendrer des incréments (dx, dy) minimisant la fonction représentative de la portion géométrique et un traitement pour la partie de portion géométrique débordant à l'extérieur de la fenêtre d'affichage pour déterminer, pour une dite portion géométrique débordant à l'extérieur de la fenêtre d'affichage, la bordure de fenêtre franchie et la coordonnée du point courant en débordement ou, pour une dite portion géométrique ayant un point initial situé en dehors de la fenêtre, un point courant de démarrage du tracé par projection sur la bordure de fenêtre dudit point initial, pour déterminer ladite variable de positionnement (XFMX, YFMY) du point courant par rapport au point final et générer un incrément (dx

18

ou dy) parallèle à la bordure de fenêtre pour réaliser un tracé en écrasement, de la portion géométrique en débordement, le long de la bordure franchie, le signe de l'incrément étant déterminé en fonction de ladite position (XFMX, YFMY) et d'une identification (PLX, PLY) de la concavité de la fonction pour la coordonnée en débordement.

14. Le circuit selon la revendication 13, caractérisé en ce qu'il est notamment constitué d'un module (110) de calcul itératif des valeurs (Fa; DFX, DFY) prises par l'équation algébrique de la portion de courbe à tracer et par les dérivées partielles, au point courant ; d'un module (130) de détermination de la position relative du point courant par rapport au point final ; d'un module (140) de détermination de la position relative du point courant par rapport à la fenêtre de visualisation, et de registres incrémenteurs-décrémenteurs (104, 105) fournissant les coordonnées (X, Y) du nouveau point courant à partir des valeurs des incréments dx, dy fournies par ledit module logique (120) en coopération avec un module logique de séquencement (121).

## Claims

1. Process for plotting a curve inside a window of a graphics display terminal, the display window being delimited by boundaries, the curve consisting of a continuous sequence of simple geometric portions of the first and/or the second degree and having a part of the curve extending outside the display window, in which process:
   a) in a display list each geometric portion is defined by:
      - the co-ordinates of the characteristic points (initial point, final point) of the geometric portion,
      - the parameters of the representative function of the geometric portion,
      - the type of geometric portion (straight line, circle, ellipse),
      - the direction of travel for a geometric portion of the second degree;
   b) in the display list the boundaries of the display window are also defined by boundary parameters;
   c) starting from a current plotting point, increments (dx, dy) are determined in order to obtain a new current plotting point by combining the co-ordinates of the preceding current point with the determined increments,
   d) step c) is repeated until the current plotting point coincides with the final point of the geometric portion;
   this process being characterised in that:
   e) prior to step c) of determining increments, a plurality of processing criteria are initialised starting from the calculation of the partial derivatives of the function at the current point, the comparison of the co-ordinates of the current point with the boundary parameters, the measurement of the travel between the current point and the final point;
   f) during step c) the criteria for processing are updated as a function of the new current point, and starting from the said processing criteria an item of information is determined relating to a particular processing operation to be carried out from amongst several possible processing operations, each processing operation taken separately determining particular increments and the possible processing operations including at least one processing operation for every geometric portion contained in the display window in order to produce increments (dx, dy) minimising the representative function of the geometric portion and a processing operation for the part of a geometric portion extending beyond the display window, comprising the steps of:
   g) for a said geometric portion extending beyond the display window, determination of the window boundary which has been exceeded and of the co-ordinate of the overextending current point, or, for a said geometric portion having an initial point situated outside the window, determination of a current point for starting plotting by projection onto the boundary of the window of the said initial point,
   h) determination of the position (XFMX, YFMY) of the current point with respect to the final point;
   i) generation of an increment (dx or dy) parallel to the window boundary in order to achieve flattened plotting of the overextending geometric portion along the exceeded boundary, the sign of the increment being determined with respect to the said position (XFMX, YFMY) and to an identification (PLX, PLY) of the concavity of the function for the overextending coordinate.

2. Process according to Claim 1, in which the initialisation step e) includes the following steps:
   - determination of the starting quadrant by calculation of the partial derivatives of the function at the initial point;

- projection of the initial point onto a boundary of the display window if the starting point is beyond the boundary;
- projection of the final point onto a boundary of the display window if the final point is beyond the boundary;
- measurement of the travel between the initial point and the final point.

3. Process according to Claim 2, in which the particular processing operation for the part of a geometric portion within the display window consists of determining the increments (dx, dy) starting from three possible configurations for incrementation, then selecting from amongst the three possible configurations the one which supplies the new current point closest to the curve in according with the Jordan method, after automatic elimination of one of the incrementation configurations by means of the Bresenham method, completed by taking into account the direction of travel of the geometric portion (for a geometric portion of the second degree) and the sign of the partial derivatives at the current point (quadrant).

4. Process according to Claim 3, in which the processing criteria also include the use of flags (PLX, PLY) representing the concavity of the geometric portion with respect to the boundaries of the display window, the value of the flags being calculated from the sign of the partial derivatives at the current point.

5. Process according to Claim 4, in which the processing criteria also include a criterion of stopping the plotting, a criterion of retrogression of the geometric portion, and a criterion of resuming the plotting within the display window.

6. Process according to Claim 5, in which the criterion of stopping the plotting is verified by the coincidence of the parameters of the current point (X, Y, PLX, PLY) with the parameters of the projected final point (Xf, Yf, PLXf, PLYf).

7. Process according to Claim 5, in which the criterion of retrogression of the geometric portion is verified as a function of the orientation of the concavity of the geometric portion at the window boundary, the external or internal position of the current point with respect to the geometric portion, the overextension of the current point and the relative position of the current point and the final point.

8. Process according to Claim 5, in which the criterion of resuming the plotting within the window is verified for plotting an arc of a circle or ellipse when:
    - the current increment corresponding to the over-extending co-ordinate directs the curve towards the window;
    - the projected current curve corresponds to a semi-circle (semi-ellipse) intersecting the boundary of the window and the final point is not situated beyond the border.

9. Process according to Claim 5, in which the particular processing of an overextending geometric portion in a corner of the window is limited to immediate updating of the value of the flags (PLX, PLY) after plotting of a unique point in the corner of the window.

10. Process according to Claim 9, in which the sign of the increment for the flattened curve is a function of the value of the flag (PLX, PLY), the said automatic increment (dx or dy) having the same sign as the corresponding increment for the current quadrant when the concavity of the geometric portion is turned towards the interior of the window at the level of the window boundary (PLY and/or PLY = 0), and having the opposite sign to the corresponding increment when the concavity of the curve is turned towards the exterior of the window at the intersection with the boundary of the window (PLX and/or PLY = 1).

11. Process according to Claim 1, in which the value of the function at the initial point of the plotting is initialised in such a way that the value of the function at the theoretical final display point is zero to permit the detection of stopping of the plotting of a geometric portion by perfect coincidence of the theoretical final point with a point of the curve.

**12.** Process according to Claim 4, in which the test for coincidence of the theoretical final point with a point of the curve for detection of stopping of plotting of a geometric portion is effected on the co-ordinates (X, Y) of the point of the curve, and on the value of the flags (PLX, PLY).

**13.** Circuit for carrying out a process for plotting a curve inside a window of a graphics display terminal, the display window being delimited by boundaries, the curve consisting of the continuous sequence of simple geometric portions of the first and/or the second degree and having a part of the curve extending outside the display window, the said circuit being produced in the form of a wired logic circuit and receiving as input (100) the contents of a display list defining each geometric portion by:
- the co-ordinates of the characteristic points (initial point, final point) of the geometric portion,
- the parameters of the representative function of the geometric portion,
- the type of geometric portion (straight line, circle, ellipse),
- the direction of travel for a geometric portion of the second degree;

and also defining the boundaries of the display window by boundary parameters; the said circuit supplying as output (150) the coordinates (x, y) and/or the increments dx, dy (-1, 0, 1) of each current point to be plotted, the said increments (dx, dy) making it possible to obtain a new current plotting point by combining the co-ordinates of the preceding current point with the determined increments, and the calculation of the said increments being repeated until the current plotting point coincides with the final point of the geometric portion, the said logic circuit being characterised by means for initialising a plurality of processing criteria starting from the calculation of the partial derivatives of the function at the current point, the comparison of the current point with the boundary parameters, the measurement of the travel between the current point and the final point, means for updating the criteria for processing with respect to the new current point, and, starting from the said processing criteria, for determining an item of information relative to a particular processing operation to be carried out from amongst several possible processing operations, and characterised by processing means comprising a logic module (120) for logical determination of the value of the increments as a function of the state of the following logic variables: variables (BXMIN, BXMAX, BYMIN, BYMAX) of the position of the current point with respect to the window; variable (D) of information regarding the direction of plotting of the curve; flags for identification of the semi-ellipse or of the semi-circle (PLX, PLY) of the projected current curve, variables (XFMX, YFMY) of positioning of the current point with respect to the final point, the sign of the function, the sign of the partial derivatives, the comparison of the values of the function corresponding to the two directions of incrementation, each processing operation taken separately determining particular increments and the possible processing operations including at least one processing operation for every geometric portion contained in the display window in order to produce increments (dx, dy) minimising the representative function of the geometric portion and a processing operation for the part of a geometric portion extending beyond the display window in order to determine, for a said geometric portion extending beyond the display window, the window boundary which has been crossed and the co-ordinate of the overextending current point, or, for a said geometric portion having an initial point situated outside the window, a current point for starting plotting by projection onto the boundary of the window of the said initial point, in order to determine the said variable of positioning (XFMX, YFMY) of the current point with respect to the final point and to generate an increment (dx or dy) parallel to the window boundary in order to achieve flattened plotting of the overextending geometric portion along the exceeded boundary, the sign of the increment being determined as a function of the said position (XFMX, YFMY) and of an identification (PLX, PLY) of the concavity of the function for the overextending co-ordinate.

**14.** Circuit according to Claim 13, characterised in that it is constituted particularly by a module (110) for iterative calculation of the values (Fa; DFX, DFY) taken by the algebraic equation of the portion of curve to be plotted and by the partial derivatives, at the current point; by a module (130) for determining the relative position of the current point with respect to the final point; by a module (140) for determining the relative position of the current point with respect to the display window, and by incremental-decremental registers (104, 105) which supply the co-ordinates (X, Y) of the new current point starting from the values of the increments dx, dy supplied by the said logic module (120) in cooperation with a sequencing logic module (121).

EP 0 293 283 B1

**Patentansprüche**

**1.** Verfahren zum Aufzeichnen einer Kurve im Inneren eines Displayfensters eines Graphikaufzeichnungsgerätes, wobei das Displayfenster durch Ränder begrenzt ist, die Kurve durch kontinuierliche Verkettung von einfachen geometrischen Kurventeilen erster und/oder zweiter Ordnung gebildet wird und ein Teil der Kurve außerhalb des Displayfensters verläuft, mit den Verfahrensschritten:

a) Man definiert in einer Displayliste jeden geometrischen Kurventeil durch:

. die Koordinaten von charakteristischen Punkten (Anfangspunkt, Endpunkt) des geometrischen Kurventeils,

. die Parameter der Funktion, die den geometrischen Kurventeil darstellt,

. die Art des geometrischen Kurventeils (Gerade, Kreis, Ellipse),

. die Laufrichtung für einen geometrischen Kurventeil zweiter Ordnung;

b) man definiert u.a. in der Displayliste die Ränder des Displayfensters durch Randparameter;

c) man bestimmt, ausgehend von einem aktuellen Bahnpunkt, die Inkremete (dx,dy), um einen neuen aktuellen Bahnpunkt zu erhalten durch Kombination der Koordinaten des aktuellen Punktes mit den bestimmten Inkrementen,

d) man wiederholt Schritt c) bis der aktuelle Bahnpunkt mit dem Endpunkt des geometrischen Kurventeils zusammenfällt;

**gekennzeichnet** durch die Schritte:

e) Man initialisiert vor dem Schritt c) der Bestimmung der Inkremente eine Vielzahl von Verarbeitungskriterien ausgehend von der Berechnung der partiellen Ableitungen der Funktion im aktuellen Punkt, vom Vergleich der Koordinaten des aktuellen Punktes mit den Randparametern und von der Messung der Abweichung zwischen aktuellem Punkt und Endpunkt;

f) man aktualisiert während des Schrittes c) die Verarbeitungskriterien als Funktion des neuen aktuellen Punktes und man bestimmt, ausgehend von diesen Verarbeitungskriterien, eine Information bezüglich einer speziellen Verarbeitung, die unter mehreren Verarbeitungen aktiviert werden soll, wobei jede Verarbeitung für sich genommen die speziellen Inkremente bestimmt und die möglichen Verarbeitungen mindestens eine Verarbeitung für jeden geometrischen Kurventeil, der im Displayfenster enthalten ist, um die Inkremente (dx,dy) zu erzeugen, die die den geometrischen Kurventeil darstellende Funktion minimieren, und eine Verarbeitung für den Teil des geometrischen Kurventeils einschließen, der nach außerhalb des Displayfensters übergreift, welche die Schritte aufweist:

g) Für einen geometrischen Kurventeil, der nach außerhalb des Displayfensters übergreift: Bestimmung des überschrittenen Fensterrandes und der Koordinate des aktuellen Punktes beim Übergriff, oder für einen geometrischen Kurventeil der einen Anfangspunkt außerhalb des Fensters hat: Bestimmung eines aktuellen Startpunktes der Bahn durch Projektion des Anfangspunktes auf den Fensterrand,

h) Bestimmung der Position (XFMX,YFMY) des aktuellen Punktes im Verhältnis zu dem Endpunkt;

i) Erzeugung eines Inkrementes (dx oder dy) parallel zum Fensterrand, um eine Stauchungsbahn des übergreifenden geometrischen Kurventeils längs des überschrittenen Fensterrandes zu realisieren, wobei das Vorzeichen des Inkrementes bestimmt wird als Funktion der Position (XFMX,YFMY) und einer Identifikation (PLX,PLY) der Konkavität der Funktion für die übergreifende Koordinate.

**2.** Verfahren nach Anspruch 1, wobei der Verfahrensschritt e) der Initialisierung die folgenden Schritte aufweist:

- Bestimmung des Startquadranten durch Berechnung der partiellen Ableitungen der Funktion im Anfangspunkt;

- Projektion des Anfangspunktes auf einen Rand des Displayfensters, wenn der Startpunkt außerhalb liegt;

- Projektion des Endpunktes auf einen Rand des Displayfensters, wenn der Endpunkt außerhalb liegt;

- Messung der Abweichung zwischen Anfangspunkt und Endpunkt.

**3.** Verfahren nach Anspruch 2, wobei die spezielle Verarbeitung für den Teil des geometrischen Kurventeils im Inneren des Displayfensters besteht aus: Bestimmen der Inkremente (dx,dy) ausgehend von drei möglichen Inkrementationskonfigurationen, dann Auswählen des neuen aktuellen Punktes, der am nächsten der Kurve liegt aus den drei möglichen Konfigurationen mittels des Jordan-Verfahrens, danach automatische Eliminierung einer der Inkrementationskonfigurationen mit Hilfe des Bresenham-Verfahrens ergänzt durch die Berücksichtigung der Laufrichtung des geometrischen Kurventeils (für

22

einen geometrischen Kurventeil zweiter Ordnung) und des Vorzeichens der partiellen Ableitungen im aktuellen Punkt (Quadrant).

4. Verfahren nach Anspruch 3, bei welchem die Verarbeitungskriterien u.a. beinhalten: Die Benutzung von Marken (PLX,PLY), die die Konkavität des geometrischen Kurventeils repräsentieren mit Bezug auf die Ränder des Displayfensters, wobei der Wert der Marken berechnet wird ausgehend vom Vorzeichen der partiellen Ableitungen im aktuellen Punkt.

5. Verfahren nach Anspruch 4, wobei die Verarbeitungskriterien u.a. ein Anhaltekriterium der Bahn enthalten, ein Umkehrkriterium des geometrischen Kurventeils und ein Kriterium der Wiederaufnahme der Bahn im Inneren des Displayfensters.

6. Verfahren nach Anspruch 5, wobei das Anhaltekriterium der Bahn verifiziert wird durch die Koinzidenz der Parameter des aktuellen Punktes (X,Y,PLX,PLY) mit den Parametern des projizierten Endpunktes (Xf,Yf,PLXf,PLYf).

7. Verfahren nach Anspruch 5, wobei das Umkehrkriterium des geometrischen Kurventeils verifiziert wird in Funktion der Orientierung der Konkavität des geometrischen Kurventeils am Rand des Fensters, der äußeren oder inneren Position des aktuellen Punktes bezüglich dem geometrischen Kurventeil, des Übergreifens des aktuellen Punktes und der Relativposition des aktuellen Punktes und des Endpunktes.

8. Verfahren nach Anspruch 5, wobei das Wiederaufnahmekriterium im Inneren des Fensters verifiziert wird durch die Bahn eines Kreis- oder Ellipsenbogens, wenn:
   - das aktuelle Inkrement, welches der übergreifenden Koordinate entspricht, die Bahn in Richtung auf das Fenster leitet;
   - die projizierte aktuelle Bahn einem Halbkreis (Halbellipse) entspricht, die den Rand des Fensters schneidet, und der Endpunkt nicht jenseits des Randes liegt.

9. Verfahren nach Anspruch 5, wobei die spezielle Verarbeitung eines geometrischen Kurventeils im Übergriff an einer Ecke des Fensters sich darauf beschränkt, den Wert der Marken (PLX,PLY) nach der Bahn eines Einheitspunktes in der Ecke des Fensters unmittelbar zu aktualisieren.

10. Verfahren nach Anspruch 9, wobei das Vorzeichen des Inkrementes für die Stauchungsbahn eine Funktion des Wertes der Marke (PLX,PLY) ist, wobei das automatische Inkrement (dx oder dy) das gleiche Vorzeichen hat wie das entsprechende Inkrement für den aktuellen Quadranten, wenn die Konkavität des geometrischen Kurventeiles auf das Innere des Fensters gerichtet ist auf der Höhe des Randes des Fensters (PLX und/oder PLY = 0), und das entgegengesetzte Vorzeichen zum entsprechenden Inkrement, wenn die Konkavität der Kurve auf das äußere des Fensters gerichtet ist beim Schneiden mit dem Rand des Fensters (PLX und/oder PLY = 1).

11. Verfahren nach Anspruch 1, wobei der Wert der Funktion im Anfangspunkt der Bahn so initialisiert ist, daß der Wert der Funktion im theoretischen Endpunkt des Displays 0 ist, um zu erlauben, daß ein Anhalten der Bahn eines geometrischen Kurventeils detektiert wird durch perfekte Koinzidenz des theoretischen Endpunktes mit einem Bahnpunkt.

12. Verfahren nach Anspruch 4, wobei die Überprüfung der Koinzidenz des theoretischen Endpunktes mit einem Bahnpunkt zum Feststellen des Anhaltens der Bahn eines geometrischen Kurventeils bewirkt wird, durch die Koordinaten (X,Y) des Bahnpunktes und den Wert der Marken (PLX,PLY).

13. Schaltung zum Durchführen des Aufzeichnens einer Kurve im Inneren eines Displayfensters eines geometrischen Aufzeichnungsgerätes, wobei das Displayfenster durch Ränder begrenzt ist, die Kurve durch kontinuierliche Verbindung von einfachen geometrischen Kurventeilen erster und/oder zweiter Ordnung gebildet wird und ein Teil der Kurve außerhalb des Displayfensters verläuft, wobei die Schaltung realisiert ist in der Form einer verdrahteten Logik und am Eingang (100) den Inhalt einer Displayliste empfängt, die jeden geometrischen Kurventeil definiert durch: Die Koordinaten von charakteristischen Punkten (Anfangspunkt, Endpunkt) des Kurventeils, die Parameter der Funktion, die den geometrischen Kurventeil darstellt, die Art des geometrischen Kurventeils (Gerade, Kreis, Ellipse), die Laufrichtung für einen geometrischen Kurventeil zweiter Ordnung; und u.a. die Ränder des Displayfensters durch Randparameter definiert, wobei die Schaltung am Ausgang (150) die Koordinaten (x,y) und/oder die Inkremente (dx,dy) (-1, 0, 1) jedes aktuellen aufzuzeichnenden Punktes liefert, wobei die Inkremente (dx,dy) es erlauben, einen neuen aktuellen Kurvenpunkt der Bahn zu erhalten, durch Kombination der Koordinaten des vorangehenden aktuellen Punktes mit den bestimmten Inkrementen, und wobei die Berechnung der Inkremente wiederholt wird bis der aktuelle Bahnpunkt mit dem Endpunkt des geometrischen Kurventeils zusammenfällt, wobei die logische Schaltung gekennzeichnet ist durch:

Initialisierungsmittel für eine Vielzahl von Verarbeitungskriterien, ausgehend von der Berechnung der partiellen Ableitungen der Funktion im aktuellen Punkt, dem Vergleich der Koordinaten des aktuellen Punktes mit den Randparameter und dem Messen der Abweichung zwischen aktuellem Punkt und Endpunkt,

Aktualisierungsmittel für die Verarbeitungskriterien als Funktion des neuen aktuellen Punktes und Bestimmungsmittel für eine Information bezüglich einer speziellen Verarbeitung ausgehend von diesen Verarbeitungskriterien, die unter mehreren möglichen Verarbeitungen aktiviert werden soll, und durch Verarbeitungsmittel, die ein logisches Modul (120) enthalten zur logischen Bestimmung des Wertes der Inkremente in Abhängigkeit vom Zustand der folgenden logischen Variablen: Variable (BXMIN,BXMAX,BYMIN,BYMAX) der Position des aktuellen Punktes bezüglich des Fensters; Variable (D) der Information über die Richtung der Kurvenbahn; Identifikationsmarken der Halbellipse oder des Halbkreises (PLX,PLY) der aktuellen projizierten Bahn, Variable (XFMY,YFMY) der Positionierung des aktuellen Punktes bezüglich dem Endpunkt, des Vorzeichens der Funktion, des Vorzeichens der partiellen Ableitungen, des Vergleichs des Wertes der Funktion, die zwei Inkrementationsrichtungen entspricht, wobei jede Verarbeitung für sich genommen die speziellen Inkremente bestimmt und die möglichen Verarbeitungen mindestens eine Verarbeitung für jeden geometrischen Kurventeil der im Displayfenster enthalten ist, um die Inkremente (dx,dy) zu erzeugen, die die den geometrischen Kurventeil darstellende Funktion minimieren, und eine Verarbeitung für den Teil des geometrischen Kurventeils einschließen, der nach außerhalb des Displayfensters übergreift, um zu bestimmen: Für einen geometrischen Kurventeil, der nach außerhalb des Displayfensters übergreift:

Des überschrittenen Fensterrandes und der Koordinate des aktuellen Punktes beim Übergriff, oder für einen geometrischen Kurventeil, der einen Anfangspunkt außerhalb des Fensters hat: Eines aktuellen Startpunktes der Bahn durch Projektion des Anfangspunktes auf den Fensterrand, um die Positionsvariable (XFMX,YFMY) des aktuellen Punktes im Verhältnis zum Endpunkt zu bestimmen und ein Inkrement (dx oder dy) parallel zum Fensterrand zu erzeugen, um eine Stauchungsbahn des übergreifenden geometrischen Kurventeils längs des überschrittenen Fensterrandes zu realisieren, wobei das Vorzeichen des Inkrementes bestimmt wird als Funktion der Position (XFMX,YFMY) und einer Identifikation (PLX,PLY) der Konkavität der Funktion für die übergreifende Koordinate.

**14.** Schaltung nach Anspruch 13, dadurch **gekennzeichnet,** daß sie besteht aus einem Modul (110) für die iterative Berechnung des Wertes (Fa;DFX,DFY), der durch die algebraische Gleichung des aufzuzeichnenden Kurventeils gegeben ist, und durch die partiellen Ableitungen im aktuellen Punkt; ein Modul (130) zur Bestimmung der Relativposition des aktuellen Punktes bezüglich des Endpunktes; ein Modul (140) zur Bestimmung der Relativposition des aktuellen Punktes bezüglich des Darstellungsfensters, und Registern zum Inkrementieren-Dekrementieren (104,105), die die Koordinaten (x,y) des neuen aktuellen Punktes liefern, ausgehend von den Werten der Inkremente (dx,dy), die durch das logische Modul (120) in Zusammenarbeit mit einem logischen und sequentiellen Modul (121) geliefert werden.

EP 0 293 283 B1

FIG.4b

FIG.4a

FIG.2b

FIG.1

FIG.2a

25

FIG.3

FIG. 6d

FIG.7

FIG.5a

FIG.5b

FIG.5c

FIG.6a

FIG.6b

FIG.6c

FIG.8

EP 0 293 283 B1

FIG.9

FIG 10a

FIG.10b

FIG.10c

écran

FIG.11

FIG.12

FIG.13

FIG.14

TABLE I. DEFINITION DES VARIABLES UTILISEES

*PARAMETRES DE LA PRIMITIVE

| | | |
|---|---|---|
| XC,YC | :INTEGER | ; *COORDONNEES DU CENTRE |
| X,Y | :INTEGER | ; *COORDONNEES DU PREMIER POINT |
| XF,YF | :INTEGER | ; *COORDONNEES DU POINT FINAL |
| DFX,DFY | :INTEGER | ; *DERIVEES PARTIELLES DU POINT FINAL |
| CERCLE | :INTEGER | ; *TYPE DE PRIMITIVE |
| SENS | :INTEGER | ; *SENS DE PARCOURS POUR LE CERCLE (ELLIPSE) |
| LSENS,NSENS | :BOOLEAN | ; *VARIABLES LOGIQUES CORRESPONDANTES |
| A,B,C,D | :INTEGER | ; *PARAMETRES DE LA FONCTION |

*EXCURSION ENTRE LES POINTS LIMITES

| | | |
|---|---|---|
| CAX,CAY | :INTEGER | ; |

*PARAMETRES DE LA FENETRE

| | | |
|---|---|---|
| XMIN,XMAX,YMIN,YMAX | :INTEGER | ; *COORDONNEES DES LIMITES |
| BXMIN,BXMAX | :INTEGER | ; *INDICATEURS DE DEPASSEMENT DE X |
| BYMIN,BYMAX | :INTEGER | ; *INDICATEURS DE DEPASSEMENT DE Y |

*SIGNES DES DERIVEES ET VARIABLES LOGIQUES CORRESPONDANTES

| | | |
|---|---|---|
| SDFX,SDFY | :INTEGER | ; |
| LSDFX,LSDFY | :BOOLEAN | ; |
| NSDFX,NSDFY | :BOOLEAN | ; |
| N1SDFX,NISDFY | :BOOLEAN | ; |
| L1SDFX,LISDFY | :BOOLEAN | ; |

*COMPARAISON DU SIGNE DES DERIVEES PARTIELLES ENTRE LE POINT THEORIQUE ET LE POINT PROJETE LORSQUE CELUI CI EST EN DEBORDEMENT

| | | |
|---|---|---|
| LPLX,LPLY | :BOOLEAN | ; |
| NPLX,NPLY | :BOOLEAN | ; |
| PLX,PLY | :INTEGER | ; |

*MEMES VARIABLES AU POINT FINAL

| | | |
|---|---|---|
| LPLXF,LPLYF | :BOOLEAN | ; |
| NPLXF,NPLYF | :BOOLEAN | ; |

```
*DIVERSES VALEURS DE LA FONCTION D'ERREUR

FF,FA,F2,F1,F3          :INTEGER       ;

*DIVERS SIGNES DE LA FONCTION

SF2                     :INTEGER       ;
LSFA,NSFA               :BOOLEAN       ;

*POSITION DU POINT COURANT PAR RAPPORT AU POINT FINAL

LXFMX,LYFMY             :BOOLEAN       ;
NXFMX,NYFMY             :BOOLEAN       ;


*CONDITION DE CHANGEMENT D'ETAT DES VARIABLES PLX ET PLY

SAUT                    :INTEGER       ;
LSAUX,LSAUY             :BOOLEAN       ;
NSAUX,NSAUY             :BOOLEAN       ;


*VALIDATION DE L'EXECUTION D'UN PAS DE PROGRAMME

UNPOINT                 :BOOLEAN       ;

*VARIABLES INTERMEDIAIRES

SFX,SFY                 :BOOLEAN       ;
LX,LY                   :BOOLEAN       ;
FIN                     :BOOLEAN       ;


TABLEAU DES BRANCHEMENTS DE L'AUTOMATE ET INDICE CORRESPONDANT

TABRA                   :TABLE         ;
INDIC                   :INTEGRER      ;


*ADRESSE DE BRANCHEMENT

BRAF2                   :CHAR          ;
CARAC                   :CHAR          ;

TABLE II B *PRODEDURE OU EXCLUSIF


PROCEDURE EOR(AA,BB:BOOLEAN;VAR CC:BOOLEAN) ;
BEGIN
CC:=(AA AND (NOT BB) OR ((NOT AA) AND BB)) ;
END;
```

<u>TABLE II.A. \*PROCEDURE DE CALCUL DU SIGNE DES DERIVEES PARTIELLES</u>
ETENDU AU CAS OU CELLES-CI SONT NULLES

```
PROCEDURE DERIVE ;
BEGIN
IF CERCLE THEN

POUR LE CERCLE

BEGIN

1.1. MEMORISATION DU SIGNES DES DERIVEES PRECEDENTES

L1DFX:=LSDFX;
L1DFY:=LSDFY;

1.2. CALCUL DU SIGNE

EOR((DFY<0),(SENS=1),SFX);
EOR((DFX<0),(SENS=0),SFY);
LSDFX:=(DFX<0)OR((DFX= 0)AND SFX);
LSDFY:=(DFY<0)OR((DFY=0)AND SFY);
IF LSDFX THEN SDFX:=1 ELSE SDFX:=0;
IF LSDFY THEN SDFY:=1 ELSE SDFY:= 0;
NSDFX:=NOT LSDFX;
NSDFY:=NOT LSDFY;


1.3.DETECTION DU CHANGEMENT DE SIGNE DES DERIVEES PARTIELLES

EOR (L1DFX,LSDFX,TSAUX);
EOR(L1DFY,LSDFY,TSAUY);
END


2. POUR LA DROITE

ELSE
BEGIN
LSDFX:=(DFX<0);
NSDFX:=(DFX>=0);
LSDFY:=(DFY<0);
NSDFY:=(DFY>=0);
IF LSDFX THEN SDFX:=1 ELSE SDFX:=0
IF LSDFY THEN SDFY:=1 ELSE SDFY:=0;
TSAUX:=FALSE;
TSAUY;=FALSE;
END;
END;
```

TABLE III. ENTREE DES DONNEES RELATIVES A UNE PRIMITIVE :
SEGMENT DE DROITE OU
ARC DE CERCLE

```
1. BEGIN
READ(FIDATA,XMIN,XMAX,YMIN,YMAX);
READ(FIDATA,CERCLE,X,Y,XC,YC,XF,YF,SENS);
IF(NOT CERCLE)THEN Y:=YC;
IF(NOT CERCLE)THEN X:=XC;
IF CERCLE THEN
BEGIN
```

INITIALISATIONS DES VARIABLES UTILES AU TRACE DU CERCLE

2. CALCUL DES DERIVEES AU POINT DE DEPART

```
DFX:=2*A*(X-XC)+C*(Y-YC);
DFY:=2*B*(Y-YC)+C*(X-XC);
```

3. SIGNE DES DERIVEES AU POINT DE DEPART

```
DERIVE;
LX:=LSDFX;LY:=LSDFY;
```

4. PROJECTION DU POINT DE DEPART EN DEBORDEMENT

```
IF(X>=XMAX)THEN X:=XMAX       ;
IF(Y>=YMAX)THEN Y:=YMAX       ;
IF(Y<=YMIN)THEN Y:=YMIN       ;
IF(X<=XMIN)THEN X:=XMIN       ;
```

5. CALCUL DE LA VALEUR DE LA FONCTION AU POINT DE DEPART

```
FA:=(A*(X-XC)*(X-XC)+B*(Y-YC)*(Y-YC)+C*(X-XC)*(Y-YC));
```

6.CALCUL DES DERIVEES AU POINT DE DEPART PROJETE

```
DFX:=2*A*(X-XC)+C*(Y-YC)      ;
DFX:=2*B*(Y-YC)+C*(X-XC)      ;
```

7. SIGNE DES DERIVEES AU POINT DEPART PROJETE

```
DERIVE;
```

8. INITIALISATION DES VARIABLES PLX ET PLY

```
EOR(LX,LSDFX,LPLX);
EOR(LY,LSDFY,LPLY);
IF LPLX THEN PLX:=1 ELSE PLX:=0;
IF LPLY THEN PLY:=1 ELSE PLY:=0;
```

<u>**TABLE III B. PRISE EN COMPTE DES CONDITIONS FINALES**</u>
1. CALCUL DES DERIVEES PARTIELLES

```
DFX:=2*A*(XF-XC)+C*(YF-YC)   ;
DFY;=2*B*(YF-YC)+C*(XF-XC)   ;
```

2. MISE A JOUR DE LA VALEUR DE LA FONCTION

```
FF:=A*(XF-XC)*(XF-XC)+B*(YF-YC)*(YF-YC)+C*(XF-XC)*(YF-YC);
FA:=FA-FF;
UNPOINT:=FALSE;
```

3. SIGNE DES DERIVEES PARTIELLES

```
DERIVE
LX:=LSDFX;LY:=LSDFY;
```

4. PROJECTION DU POINT FINAL S'IL EST EN DEBORDEMENT

```
IF(XF>=XMAX)THEN XF:=XMAX;
IF(YF>=YMAX)THEN YF:=YMAX;
IF(XF<=XMIN)THEN XF:=XMIN;
IF(YF<=YMIN)THEN YF:=YMIN;
```

5. CALCUL DES DERIVEES PARTIELLES PROJETE

```
DFX:=2*A*(XF-XC)+C*(YF-YC);
DFY:=2*B*(YF-YC)+C*(XF-XC);
```

6. SIGNE DES DERIVEES PARTIELLES AU POINT PROJETE

```
DERIVE;
```

CALCUL DES VARIABLES PLXF ET PLYF

```
EOR(LX,LSDFX;LPLXF);
EOR(LY,LSDFY,LPLYF);
IF LPLXF THEN PLXF:=1 ELSE PLXF:=0;
IF LPLYF THEN PLYF:=1 ELSE PLYF:=0;
```

7. CALCUL DE L'EXCURSION DES COORDONNEES

```
CAY:=Y-YF;
CAX:=X-XF;
```

8. INITIALISATION DES DERIVES POUR LE PREMIER POINT

```
DFX:=2*A*(X-XC)+C*(Y-YC);
DFY:=2*B*(Y-YC)+C*(X-XC);
END
```

ELSE

### TABLE III C. INITIALISATION DES PARAMETRES UTILES AU TRACER DE LA DROITE

```
BEGIN
1.DFX:=-(YF-YC);
DFY:=XF-XC;
2.IF (X>=XMAX)THEN X:=XMAX;
IF (XF>=XMAX)THEN XF:=XMAX;
IF (YF>=YMAX)THEN YF:=YMAX;
IF (Y>=YMAX)THEN Y:=YMAX;
IF (YF<=YMIN)THEN YF:=YMIN;
IF (Y<=YMIN)THEN Y:=YMIN;
IF (XF<=XMIN)THEN XF:=XMIN;
IF (X<=XMIN)THEN X:=XMIN;
FA:=(X-XC)*DFX+(Y-YC)*DFY;
3.CAX:=X-XF;
CAY:=Y-YF;
PLXF:=0; PLYF:=0; UNPOINT:=FALSE;
END;
```

### TABLE IV. GENERATION DES POINTS DE LA PRIMITIVE

```
REPEAT
BEGIN

1.CALCUL DES VARIABLES LOGIQUES QUI DETERMINENT
L'ETAT DE L'AUTOMATE DE CALCUL DES POINTS


1.1. DETERMINATION DES COORDONNEES EN DEBORDEMENT

LXMAX:=(X>=XMAX);
LYMAX:=(Y>=YMAX);
LXMIN:=(X<=XMIN);
LYMIN:=(Y<=YMAX);

1.2. SIGNE DES DERIVEES PARTIELLES ET DE LA FONCTION

DERIVE.
LSFA:=(FA<0);
NSFA:=(FA>=0);

1.3. VARIABLES PLX ET PLY

LPLX:=(PLX=1);
NPLX:=(PLX=0);
LPLY:=(PLY=1);
NPLY:=(PLY=0);

1.4. POSITION DU POINT COURANT PAR RAPPORT AU POINT FINAL
```

```
NXFMX:=XF<=X;
LXFMX:=XF>=X;
NYFMY:=YF<=Y;
LYFMY:=YF>=Y;
LSENS:=(SENS=1);
NSENS:=(SENS=0);
```

2.CONDITION DE REBROUSSEMENT

```
        2.1.LSAUX:=NSFA AND LXMAX AND LSDFX
            AND ((NSENS AND LPLX AND L1SDFY AND LYFMY)
                        OR(NSENS AND NPLX AND N1SDFY AND NYFMY)
                        OR(LSENS AND LPLX AND N1SDFY AND NYFMY)
                        OR (LSENS AND NPLX AND L1SDFY AND LYFMY))
            OR NSFA AND LXMIN AND NSDFX
                AND ((NSENS AND NPLX AND L1SDFY AND LYFMY)
                        OR(NSENS AND LPLX AND N1SDFY AND NYFMY)
                        OR(LSENS AND NPLX AND N1SDFY AND NYFMY))
                        OR(LSENS AND LPLX AND L1SDFY AND LYFMY))
            OR LPLX AND ((LXMAX AND NSDFX)OR(LXMIN AND LSDFX));
            LSAUY:=NSFA AND LYMAX AND LSDFY
                AND ((NSENS AND NPLY AND L1SDFX AND LXFMX)
                        OR(NSENS AND LPLY AND N1SDFX AND NXFMX)
                        OR(LSENS AND NPLY AND N1SDFX AND NXFMX)
                        OR(LSENS AND LPLY AND L1SDFX AND LXFMX))
            OR NSFA AND LYMIN AND NSDFY
                AND ((NSENS AND LPLY AND L1SDFX AND LXFMX)
                        OR (NSENS AND NPLY AND N1SDFX AND NXFMX)
                        OR (LSENS AND LPLY AND N1SDFX AND NXFMX)
                        OR (LSENS AND NPLY AND L1SDFX AND LXFMX));
            OR LPLY AND ((LYMAX AND NSDFY)OR(LYMIN AND LSDFY));
        2.2.LSAUX:=LSAUX OR(TSAUX AND(LXMAX OR LXMIN)AND UNPOINT);
        LSAUY:=LSAUY OR(TSAUY AND(LYMAX OR LYMIN)AND UNPOINT);
```

2.3.MISE A JOUR DES VARIABLES PLX OU PLY

```
EOR(LPLX,LSAUX,LPLX);
EOR(LPLY,LSAUY,LPLY);
IF LPLX THEN PLX:=1 ELSE PLX:=0;
IF LPLY THEN PLY:=1 ELSE PLY:=0;
IF(LSAUX OR LSAUY)THEN SAUT:=1 ELSE SAUT:=0
IF LXMAX THEN BXMAX:=1 ELSE BXMAX:=0;
IF LYMAX THEN BYMAX:=1 ELSE BYMAX:=0;
IF LYMIN THEN BYMIN:=1 ELSE BYMIN:=0;
IF LXMIN THEN BXMIN:=1 ELSE BXMIN:=0;
```

3. CALCUL DE L'INDICE PUIS DE L'ETAT CORRESPONDANT DE L'AUTOMATE

```
INDIC:=PLX*256+PLY*128+64*BXMIN+32*BXMAX+16*BYMIN+8*BYMAX+
                SDFY*4+SDFX*2+SENS+512*SAUT;
BRAF2:=TABRA(INDIC);
```

TABLE V. PRESENTATION DES CALCULS EXECUTES DANS LES DIFFERENTES BRANCHES DE L'AUTOMATE

```
TABLE V.0          CASE BRAF2 OF
                   '0':BEGIN
                   IF NOT UNPOINT THEN UNPOINT:=NOT UNPOINT;
                   F2:=FA+DFX-DFY+A+B-C;
                   IF F2>0 THEN
                   BEGIN
                   F1:=F2-DFX-A+C;
                   IF ((F1+F2) 0) THEN
                           BEGIN
                           FA:=F2;
                           DFX:=DFX+2*A;
                           DFY:=DFY+C;
                           X:=X+1;CAX:=CAX+1;
                           END
                           ELSE
                           FA:=F1;
                           DFY:=DFY-2*B;
                           DFX:=DFX-C;
                           Y:=Y-1;CAY:=CAY-1;
                           END
                   ELSE BEGIN
                           F3:=F2+DFY-B+C;
                           IF ((F2+F3)>=0) THEN
                           BEGIN
                           FA:=F2
                           DFY:=DFY-2*B;
                           DFX:=DFX-C;
                           Y:=Y-1 ;CAY:=CAY-1;
                           END
                           ELSE
                           FA:=F3;
                           DFX:=DFX+2*A;
                           DFY:=DFY+C;
                           X:=X+1;CAX:=CAX+1
                           END;
END;


TABLE V.1.  '1':BEGIN
IF NOT UNPOINT THEN UNPOINT:=NOT UNPOINT.
F2:=FA-DFX+DFY+A+B-C;
      IF F2>0 THEN
                   BEGIN
                   F1:=F2-DFY-B+C;
                   IF ((F1+F2)<0) THEN
                           BEGIN
                           FA:=F2;
                           DFY:=DFY+2*B;
                           DFX:=DFX+C;
                           Y:=Y+1;CA:=CAY+1;
                           END
                           ELSE
                           FA:=F1;
                           DFX:=DFX-2*A;
```

```
                        DFY:=DFY-C;
                        X:=X-1;CAX:=CAX-1;
                        END
                ELSE BEGIN
                        F3:=F2+DFX-A+C;
                        IF ((F2+F3)>=0) THEN
                        BEGIN
                        FA:=F2;
                        DFX:=DFX-2*A;
                        DFY:=DFY-C;
                        X:=X-1;CAX:=CAX-1;
                        END
                        ELSE
                        FA:=F3;
                        DFY:=DFY+2 B;
                        DFX:=DFX+C;
                        Y:=Y+1;CAY:=CAY+1;
                        END;
END;

TABLE V.2.  '2':BEGIN
      IF NOT UNPOINT THEN UNPOINT:=NOT UNPOINT;
      F2:=FA+DFX+DFY+A+B+C;
            IF F2>0 THEN
                    BEGIN
                    F1:=F2-DFY-B-C;
                    IF ((F1+F2)<0) THEN
                            BEGIN
                            FA:=F2;
                            DFY:=DFY+2*B;
                            DFX:=DFX+C;
                            Y:=Y+1;CAY:=CAY+1;
                            END
                            ELSE
                            FA:=F1;
                    DFX:=DFX+2*A;
                    DFY:=DFY+C;
                    X:=X+1;CAX:=CAX+1;
            ELSE BEGIN
                    F3:=F2-DFX-A-C;
                    IF ((F2+F3)>=0) THEN
                            BEGIN
                            FA:=F2;
                            DFX:=DFX+2*A;
                            DFY:=DFY+C;
                            X:=X+1;CAX:=CAX+1;
                            END
                            ELSE
                            FA:=F3;
                    DFY:=DFY+2*B;
                    DFX:=DFX+C;
                    Y:=Y+1;CAY:=CAY+1;
                    END;
END;

TABLE V.3.  '3';BEGIN
      IF NOT UNPOINT THEN UNPOINT:=NOT UNPOINT;
      F2:=FA-DFX-DFY+A+B+C;
```

40

```
            IF  F2>0  THEN
                        BEGIN
                        F1:=F2+DFX-A-C;
                        IF  ((F2+F1)<=0)  THEN
                                BEGIN
                                FA:=F2;
                                DFX:=DFX-2*A;
                                DFY:=DFY-C;
                                X:=X-1;  CAX:=CAX-1;
                                END
                                ELSE
                                FA:=F1.
                        DFY:=DFY-2*B;
                                DFX:=DFX-C;
                        Y:=Y-1;CAY:=CAY-1;
                        END
                ELSE BEGIN
                        F3:=F2+DFY-B-C;
                        IF  ((F2+F3)>=0)  THEN
                        BEGIN
                        FA:=F2;
                        DFY:=DFY-2*B;
                                DFX:=DFX-C;
                                Y:=Y-1;  CAY:=CAY-1;
                                END
                                ELSE
                                FA:=F3;
                                DFX:=DFX-2*A;
                                DFY:=DFY-C;
                                X:=X-1;  CAX:=CAX-1;
                                END;
END;

TABLE V.4.  '4'BEGIN
        IF NOT UNPOINT THEN UNPOINT:=NOT UNPOINT;
        F2:=FA-DFX-DFY+A+B+C;
                IF  F2>0  THEN
                                BEGIN
                                F1:=F2+DFY-B-C;
                                IF  ((F1+F2)<0)  THEN
                                BEGIN
                                FA:=F2;
                                DFY:=DFY-2*B;
                                DFX:=DFX-C;
                                Y:=Y-1;CAY:=CAY-1;
                                END
                                ELSE
                                BEGIN
                                FA:=F1;
                                END
                        DFX:=DFX-2*A;
                        DFY:=DFY-C;
                        X:=X-1;CAX:=CAX-1;
                        END
                ELSE BEGIN
```

EP 0 293 283 B1

```
                              F3:=F2+DFX-A-C;
                              IF ((F2+F3)>=0) THEN
                                    BEGIN
                                    FA:=F2;
                                    DFX:=DFX-2*A;
                                    DFY:=DFY-C;
                                    X:=X-1; CAX:=CAX-1;
                                    END
                                    ELSE
                                    BEGIN
                                    FA:=F3;
                                    END;
                              DFY:=DFY-2*B;
                                    DFX:=DFX-C;
                              Y:=Y-1;CAY:=CAY-1;
                              END;
END;

TABLE V.5. '5';BEGIN
      IF NOT UNPOINT THEN UNPOINT :=NOT UNPOINT;
      F2:=FA+DFX+DFY+A+B+C;
            IF F2>0 THEN
                              BEGIN
                              F1:=F2-DFX-A-C:
                              IF ((F2+F1)<=0) THEN
                                    BEGIN
                                    FA:=F2;
                                    DFX:=DFX+2*A;
                                    DFY:=DFY+C;
                                    X:=X+1:CAX:=CAX+1;
                                    END
                                    ELSE
                                    FA:=F1;
                              DFY:=DFY+2*B;
                                    DFX:=DFX+C;
                                    Y:=Y+1; CAY:=CAY+1;

                              END
            ELSE BEGIN
                              F3:=F2-DFY-B-C;
                              IF ((F2+F3)>=0) THEN
                                    BEGIN
                                    FA:=F2;
                                    DFY:=DFY+2*B;
                                    DFX:=DFX+C;
                                    Y:=Y+1; CAY:=CAY+I;
                                    END
                                    ELSE
                                    FA:=F3;
                              DFX:=DFX+2*A.
                              DFY:=DFY+C;
                              X:=X+1;CAX:=CAX+1
                              END;
END;

TABLE V.6. '6'BEGIN
      IF NOT UNPOINT THEN UNPOINT:=NOT UNPOINT;
      F2:=FA-DFX+DFY+A+B-C;
            IF F2>0 THEN
```

```
                        BEGIN
                        F1:-F2+DFX-A+C;
                        IF ((F2+F1)<-0) THEN
                                BEGIN
                                FA:-F2;
                                DFX:-DFX-2*A;
                                DFY:-DFY-C;
                                X:-X-1;CAX:-CAX-1
                                END
                                ELSE
                                FA:-F1;
                        DFY:-DFY+2*B;
                        DFX:-DFX+C;
                        Y:-Y+1; CAY:-CAY+1;
                        END
                ELSE BEGIN
                        F3:-F2-DFY-B+C;
                        IF ((F2+F3)>-0) THEN
                                BEGIN
                                FA:-F2;
                                DFY:-DFY+2*B;
                                DFX:-DFX+C;
                                Y:-Y+1;CAY:-CAY+1;
                                END
                                ELSE
                                FA:F3;
                                DFX:-DFX-2*A;
                                DFY:-DFY-C;
                        X:-X-1;CAX:-CAX-1;
                        END;
        END;


TABLE V.7.  '7':BEGIN
        IF NOT UNPOINT THEN UNPOINT:-NOT UNPOINT;
        F2:=FA+DFX-DFY+A+B-C;
        IF F2>0 THEN
                BEGIN
                F1:-F2+DFY-B+C;
                IF ((F2+F1)<-0) THEN
                        BEGIN
                        FA:-F2;
                        DFY:-DFY-2*B;
                        DFX:-DFX-C;
                        Y:-Y-1; CAY:-CAY-1;
                        END
                        ELSE
                        FA:-F1;
                DFX:-DFX+2*A;
                DFY:-DFY+C;
                X:-X+1;CAX:-CAX+1;
                END
            ELSE BEGIN
                    F3:-F2-DFX-A+C;
                    IF ((F2+F3)>-0) THEN
                            BEGIN
                            FA:-F2;
```

```
                        DFX:=DFX+2*A;
                        DFY:=DFY+C;
                        X:=X+1:CAX:=CAX+1;
                        END
                        FA:=F3;
                  DFY:=DFY-2*B;
                        DFX:=DFX-C;
                  Y:=Y-1;CAY:=CAY-1;
                  END
END;


TABLE V.8. '8':BEGIN
IF NOT UNPOINT THEN UNPOINT:=NOT UNPOINT);
FA:=FA+DFX+A;
X:=X+1;CAX:=CAX+1;
DFX:=DFX+2*A;
DFY:=DFY+C;
     END;


TABLE V.9. '9':BEGIN
IF NOT UNPOINT THEN UNPOINT:=NOT UNPOINT;
FA:=FA-DFX+A;
X:=X-1;CAX:=CAX-1;
DFX:=DFX-2*A;
DFY:=DFY-C;
     END;


TABLE V.10. 'A':BEGIN
IF NOT UNPOINT THEN UNPOINT:=UNPOINT
FA:=FA-DFY+B;
Y:=Y-1;CAY:=CAY-1;
DFY:=DFY-2*B;
DFX:=DFX-C;
     END;


TABLE V.11. 'B':BEGIN
IF NOT UNPOINT THEN UNPOINT:=NOT UNPOINT;
FA:=FA+DFY+B;
Y:=Y+1;CAY:=CAY+1;
DFY:=DFY+2*B;
DFX:=DFX+C;
     END;


TABLE V.12. 'C':BEGIN
LPLX:=NOT LPLX;
IF LPLX THEN PLX:=1 ELSE PLX:=0;
     END;


TABLE V.13. 'D':BEGIN
LPLY:=NOT LPLY;
IF LPLY THEN PLY:=1 ELSE PLY:=0;
     END;


TABLE V.14. 'E':BEGIN
LPLX:=NOT LPLX;
LPLY:=NOT LPLY;
IF LPLX THEN PLX:=1 ELSE PLX:=0;
```

```
IF LPLY THEN PLY:-1 ELSE PLY:-0;
FIN:-TRUE;
      END;
```

TABLE V.15. `'F':WRITELN ('CAS IMPOSSIBLE ',X,Y,INDIC,BRAF2);`

TABLE V.16. `'G':WRITELN ('PROCEDURE DE REBROUSSEMENT VALIDEE');`

```
            END;
END;
```

TABLE VI. VERIFICATION DU CRITERE D'ARRET

```
UNTIL (CAX-0)AND(CAY-0)AND(UNPOINT)AND(((PLXF-PLX)AND(PLYF=PLY))OR FIN);
WRITELN('CRITERE DE FIN ATTEINT');
END;
END.
```